(19) Europäisches Patentamt
European Patent Office
Office européen des brevets

(11) **EP 2 865 238 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **13732132.9**

(22) Anmeldetag: **25.06.2013**

(51) Int Cl.:
**G01R 27/02** *(2006.01)* **G01R 27/14** *(2006.01)*

(86) Internationale Anmeldenummer:
**PCT/EP2013/063293**

(87) Internationale Veröffentlichungsnummer:
**WO 2014/001342 (03.01.2014 Gazette 2014/01)**

(54) **BELEUCHTUNGSANLAGE MIT EINER SCHNITTSTELLE AUFWEISEND EIN NETZGERÄT UND MINDESTENS EIN LICHTQUELLENMODUL**

LIGHTING SYSTEM WITH AN INTERFACE COMPRISING A POWER SUPPLY AND AT LEAST A LIGHT SOURCE MODULE

SYSTÈME D'ÉCLAIRAGE ÉQUIPÉ D'UNE INTERFACE COMPRENANT UN BLOC D'ALIMENTATION ET AU MOINS UN MODULE DE SOURCES LUMINEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2012 IT TO20120558**
**21.12.2012 DE 102012224348**

(43) Veröffentlichungstag der Anmeldung:
**29.04.2015 Patentblatt 2015/18**

(73) Patentinhaber:
• **OSRAM GmbH**
**80807 München (DE)**
• **Osram S.p.A. - Societa' Riunite Osram Edison Clerici**
**20126 Milano (IT)**
Benannte Vertragsstaaten:
**IT**

(72) Erfinder:
• **LIMMER, Walter**
**81825 München (DE)**
• **ANGELIN, Francesco**
**I-31021 Mogliano Veneto (TV) (IT)**
• **DE ANNA, Paolo**
**I-31039 Riese Pio X (TV) (IT)**
• **RUDOLPH, Bernd**
**85659 Forstern (DE)**

(56) Entgegenhaltungen:
EP-A2- 1 411 750       EP-A2- 1 411 750
WO-A2-2006/126172   DE-A1- 10 051 528
DE-A1- 10 051 528     US-A1- 2010 244 790
US-A1- 2011 210 675   US-B1- 6 225 802

## Beschreibung

### Technisches Gebiet

Die Erfindung bezieht sich auf das Gebiet des Solid State Lighting, also auf die Allgemeinbeleuchtung hauptsächlich oder ausschließlich durch LED, und beschreibt eine Beleuchtungsanlage mit einer Schnittstelle zwischen einem Lichtquellenmodul und dem es versorgenden Netzgerät, das Lichtquellenmodul sowie das zugehörige Netzgerät. Die gegenwärtige Erfindung bezieht sich im Allgemeinen auf ein Netzgerät zur Versorgung eines Lichtquellenmoduls oder mehrerer Lichtquellenmodule, insbesondere solcher mit Leuchtdioden (LED) als Lichtquellen, sowie auf eine Beleuchtungsanlage umfassend ein Netzgerät und mindestens ein Lichtquellenmodul. Im Speziellen beziehen sich verschiedene, hier offenbarte erfinderische Methoden und Schaltungen auf ein selbsteinstellendes Netzgerät für die Versorgung eines Lichtquellenmoduls oder mehrerer Lichtquellenmodule mit Leuchtdioden (LED) als Lichtquellen, und auf eine LED-basierte Beleuchtungsanlage umfassend ein selbsteinstellendes Netzgerät und mindestens ein Lichtquellenmodul.

### Hintergrund

Beleuchtungskomponenten, die auf Halbleiterlichtquellen wie beispielsweise LED basieren, bieten eine ernsthafte Alternative zu traditionellen Leuchtstoff-, Hochdruckentladungs- oder Glühlampen. Prinzip bedingt haben LED nicht nur einen hohen Umwandlungswirkungsgrad, eine hohe optische Effizienz, eine lange zu erwartende Lebensdauer und geringe Betriebskosten, sondern auch viele weitere Vorteile. In einigen Anwendungen kann eine LED-basierte Beleuchtungsanlage ein Netzgerät umfassen, das einen LED-Betriebsstrom für eine Mehrzahl von Lichtquellenmoduln, jedes wiederum eine oder mehrere LED beinhaltend, liefert. Beispielsweise kann ein Lichtquellenmodul einen Schaltungsträger, z.B. eine gedruckte Schaltung oder ein "Printed Circuit Board (PCB)", aufweisen, auf dem die eine oder mehreren LED montiert sind. Solche Schaltungsträger können in Schienen einer Leuchte eingeschoben oder in Buchsen eines Hauptträgers eingesteckt sein, auf dem sich das Netzgerät befinden kann.
In verschiedenen Anwendungen bzw. Installationen einer LED-basierten Beleuchtungsanlage wird die Anzahl der nötigen LED oder Lichtquellenmodule jeweils unterschiedlich sein. Zum Beispiel wird die Anzahl der LED oder Lichtquellenmodule an die erforderliche Lichtabstrahlung einer bestimmten Installation anzupassen sein.
Im Allgemeinen ist der Wert des LED-Betriebsstroms, der von einem Netzgerät geliefert wird, an die Anzahl der von diesem Netzgerät zu versorgenden LED oder Lichtquellenmodule anzupassen. Wenn ein einzelnes Netzgerät in einer Vielzahl von LED-basierten Beleuchtungsanlagen mit unterschiedlichen Anzahlen von LED oder Lichtquellenmoduln eingesetzt werden soll, muss das Netzgerät eine Vorrichtung zur Einstellung des Sollwerts des LED-Betriebsstroms beinhalten, welche den Betriebsstrombedarf an die unterschiedlichen Lichtquellenmodule entsprechend der unterschiedlichen Anzahl von Lichtquellen, die sie enthalten, anpasst. Derzeit wird die Anzahl von LED und Lichtquellenmoduln, die in einer bestimmten LED-basierten Beleuchtungsanlage enthalten sein sollen, zum Herstellungszeitpunkt dieser LED-Beleuchtungsanlage festgelegt. Wenn das gleiche Netzgerät in unterschiedlichen LED-Beleuchtungsanlagen mit unterschiedlicher Anzahl von Lichtquellenmoduln zum Einsatz kommen soll, dann muss das Netzgerät zum Herstellungszeitpunkt auf die vorgesehene LED-Beleuchtungsanlage hin programmiert werden, so dass der gelieferte LED-Betriebsstrom passend ist für die bestimmte Anzahl der Lichtquellenmodule, die in der vorgesehenen LED-Beleuchtungsanlage enthalten sind.

Sobald während der größeren Lebensdauer einer LED-basierten Beleuchtungsanlage ein Lichtquellenmodul mit geringerer Lebensdauer ausgewechselt werden muss, erwächst das dieser Erfindung eigentlich zugrundeliegende Problem: Der Fortschritt auf der Bauteilebene der LED ist derzeit so gravierend, dass ein typengleiches Lichtquellenmodul deutlich mehr Licht ausstrahlen oder für das gleiche ausgestrahlte Licht wesentlich weniger Strom erfordern wird, wenn es beispielsweise drei Jahre jünger ist als das Vergleichsmodul. Bei obiger Erörterung spielen also nicht nur die zum Herstellungszeitpunkt der Beleuchtungsanlage vorliegende Spezifikation, sondern auch der Zeitpunkt an sich eine wesentliche Rolle.

Dieses Problem ist mit der Einrichtung eines Datenaustausches zwischen Netzgerät und Lichtquellenmodul aufgegriffen worden. Datenaustausch bedeutet dabei, dass das Lichtquellenmodul einige Information an das Netzgerät überträgt, betreffend den Strombedarf des Moduls zur Erfüllung seiner optischen Spezifikation oder seine Arbeitstemperatur zwecks Absenkung des Wertes des gelieferten Stroms bei Überschreitung eines gewissen Temperaturgrenzwertes. Es sind verschiedene Wege bekannt, diese Information zwischen dem Lichtquellenmodul und dem Netzgerät auszutauschen. Busse können zum Datenaustausch genutzt werden. Bekannt sind hier beispielsweise analoge Busse wie die 1...10V-Schnittstelle oder digitale Busse wie DALI (Digital Addressable Lighting Interface). Ebenso bekannte Techniken sind einfache Widerstandsnetzwerke, die vom Netzgerät ausgemessen werden können und ihm den Strombedarf des gerade angeschlossenen Lichtquellenmoduls oder der gerade angeschlossenen Lichtquellenmodule übermitteln. Die DE 100 51 528 A1 offenbart solch eine Schnittstelle, bei der ein spezieller Widerstand, ein sogenannter Stromsetzwiderstand, zwischen einer dritten Leitung und der negativen Versorgungsleitung geschaltet ist. Wenn mehrere Lichtquellenmodule an ein einzelnes Netzgerät angeschlossen sind, sind die Widerstände in Serie oder parallel zueinander verbunden, und auf diese Weise wird ein Summensignal an das Netzgerät zurückgegeben, um den Gesamtstrombedarf zu definieren. Die deutsche Patentanmeldung 102011087658.8 offenbart ebenso Widerstände zum Definieren des Strombedarfs jedes einzelnen Lichtquellenmoduls, also modulspezifische Stromsetzwiderstände.

Die Buslösungen haben den Nachteil der zwei zusätzlich erforderlichen Verbindungsleitungen. Die Widerstandslösungen benötigen nur eine zusätzliche Verbindungsleitung, aber das Bewerten des Widerstandsnetzwerks und die daraus folgende Einstellung des Stromwertes können sehr kompliziert werden.

Seit vollständige Beleuchtungssysteme aus Netzgerät und Lichtquellenmodul(n) auf dem Markt erschienen sind, versuchen verschiedene Firmen einen gemeinsamen Weg einzuschlagen, die Kommunikation zwischen den zwei Bestandteilen obiger Systeme in Gang zu bringen; ebenso sind für die komplizierteren High-End-Systeme einige digitale Protokolle in Benutzung, jedoch ist letztere Technologie nicht der Hintergrund der vorliegenden Erfindung und muss gesondert behandelt werden.

Aus der EP 1411 750 A2 ist eine Stromversorgung für ein LED Modul bekannt, welche über eine Kommunikationsleitung eine Spannung an die Kommunikationsleitung anlegt, um einen Widerstand auf dem LED Modul zu messen und anhand des Widerstandes den Typ des LED Moduls zu erkennen und entsprechende Betriebsparameter einzustellen.

Aus der DE 100 51 528 A1 ist ein Beleuchtungssystem bekannt, welches über Leuchtmodule mit einer Kodierungseinrichtung verfügt, anhand derer das Betriebsgerät unabhängig von der Anzahl der angeschlossenen Leuchtmodule jeweils den richtigen Betriebsstrom erzeugt.

Aus der US 2010 244 790 A1 ist ein Netzteil zum Betreiben von Lasten wie LEDs bekannt, bei welchem der globale Betriebsstrom für die Lasten mittels einer Referenzspannung programmiert werden kann. Die Referenzspannung wird dazu in einer Konversionseinheit in partielle Betriebsströme umgewandelt, die alle zum globalen Betriebsstrom beitragen.

Die Firma Osram beispielsweise hat bereits eine Schnittstelle vorgeschlagen, die auch in der Lage ist, eine Hilfsleistung an eine aktive Schaltung zur Temperaturrückregelung auf einem Lichtquellenmodul zu liefern. In diesem Schnittstellentyp formt ein Stromsetzwiderstand auf dem Lichtquellenmodul in Verbindung mit einem Pullup-Widerstand im Netzgerät einen Spannungsteiler mit dem Zweck, eine Mittelpunktsspannung zu bilden, die den Ausgangsstrom des Netzgeräts definiert. Ein Operationsverstärker auf dem Lichtquellenmodul beginnt, diese Mittelpunktsspannung und damit den gelieferten Betriebsstrom zu begrenzen, sobald das Modul überhitzt.

Die Firma Philips hat eine andere Schnittstelle vorgeschlagen, in der eine Signalleitung mit dem Stromsetzwiderstand und eine andere mit einem temperaturempfindlichen Widerstand verbunden sind, und bei der die Temperaturrückregelung vom Netzteil selbst vorgenommen wird, ohne dabei irgendein aktives Bauteil auf einem Lichtquellenmodul zu benötigen.

Beide letztgenannten Schnittstellen benötigen eine dritte Extraleitung für die gemeinsame Signalmasse-Rückführung und nutzen eine vom Stromsetzwiderstand auf dem Lichtquellenmodul erzeugte Spannung zur Einstellung des Betriebsstromsollwertes in der Weise, dass der Betriebsstrom um so höher eingestellt wird, je höher die Spannung über dem Stromsetzwiderstand oder über den Stromsetzwiderständen ist.

Kürzlich hat die Firma Osram eine leicht abgewandelte Schnittstelle vorgestellt, die auf dem oben bereits erwähnten 1...10V-Bus basiert, der jedoch durch eine Präzisionsstromquelle im Netzgerät abgewandelt ist, die es ermöglicht, mit nur einen einfachen Stromsetzwiderstand pro Lichtquellenmodul eine präzise Betriebsstromsollwert-Einstellung zu erreichen. Eine weitere Abwandlung dieser Schnittstelle wiederum besteht darin, die Stromsetzwiderstände auf den Lichtquellenmoduln durch Zenerdioden zu ersetzen.

Derzeit kristallisiert sich eine neue Anforderung am Markt heraus: Die Möglichkeit der Parallelschaltung verschiedener Module und ihre gemeinsame Versorgung durch ein- und dasselbe Netzgerät. Der von diesem Netzgerät gelieferte Betriebsstrom muss dabei der Summe der Nominalstromwerte aller momentan daran angeschlossenen Lichtquellenmodule entsprechen, und die Fähigkeit zur Temperaturrückregelung muss auch bei Multi-Modul-Anordnungen erhalten bleiben. Ein Thermo-Rückregelungssignal auf einer Datenleitung sollte schließlich sogar dominant ggü. einem Summenstrom-Setzsignal sein.

Gleichwohl ist es notwendig, die Beleuchtungsanlagen einfacher zu gestalten, was derzeit zur Reduktion der Anzahl der zusätzlichen Datenleitungen führt. Busbasierte Schnittstellen benötigen mindestens vier Leitungen, zwei für den Lichtquellenmodul-Betriebsstrom und mindestens zwei für den Bus.

Neue Eigenschaften zur Erfüllung der Anforderungen sind angedacht:

-- Mehrere Module sollen parallel verbindbar und von ein- und demselben Netzgerät unter Nutzung derselben Schnittstelle versorgbar sein. Dabei werden die einzelnen Module als untereinander gleiche angesehen, oder zumindest als solche mit untereinander gleicher Betriebsspannung.

-- Die Schnittstelle zur Betriebsstrom-Einstellung sollte eine reduzierte Anzahl an Leitungen aufweisen und sollte aufgrund der Kostenthematik so einfach wie möglich sein, insbesondere auf der Seite der Lichtquellenmodule.

Alle bisher vorgestellten und bekannten Schnittstellen sind nicht in der Lage, Mehrfachverbindungen von Lichtquellenmoduln korrekt zu unterstützen. Auch sind die Auswerteschaltungen für die Schnittstellen aufwendig herzustellen. Eine neue Schnittstelle wird vorgeschlagen, die einfacher herzustellen ist.

**Aufgabe**

Es ist Aufgabe der Erfindung, ein Netzteil und ein Lichtquellenmodul anzugeben, welche eine einfache Schnittstelle zur Einstellung des an das Lichtquellenmodul anzulegenden Stromes aufweist. Es ist weiterhin Aufgabe der Erfindung, ein Verfahren zum Einstellen eines Stromwertes für mindestens ein an ein Netzteil angeschlossenes Lichtquellenmodul anzugeben, welches einen geringen Aufwand bei der Herstellung der beteiligten Komponenten erfordert.

**Darstellung der Erfindung**

Die Lösung der Aufgabe erfolgt erfindungsgemäß mit einem Netzteil mit den Merkmalen des Anspruchs 1und einer Beleuchtungsanlage mit den Merkmalen des Anspruchs 10. Die Lösung der Aufgabe bezüglich des Verfahrens erfolgt mit einem Verfahren zu Einstellung eines Stromwertes mit den Merkmalen des Verfahrensanspruches 11. Durch ein Netzteil mit diesen Merkmalen wird zur Einstellung des Stromes nur eine zusätzliche Kommunikationsleitung benötigt, da eine Stromleitung zwischen Netzteil und Lichtquellenmodul mitbenutzt wird. Es können mehrere Lichtquellenmodule an das Netzteil angeschlossen werden, ohne dass die Funktionalität zur richtigen Einstellung des Stromes beeinträchtigt ist.

Bevorzugt werden die Lichtquellenmodule parallel geschaltet an das Netzteil angeschlossen. Dies hat den Vorteil, dass dann auch die Stromsetzwiderstände parallel geschaltet sind, und der resultierende Leitwert der parallelgeschalteten Widerstände proportional zum Strombedarf aller angeschlossenen Lichtquellenmodule ist. Das Netzteil weist einen Ausgang zum Ausgeben eines Betriebsstromes in Abhängigkeit eines internen Messsignals auf, sowie eine Kommunikationsleitung, eine Strommesseinrichtung, die mit der Kommunikationsleitung verbunden ist, wobei die Strommesseinrichtung eingerichtet ist, einen Strom auf der Kommunikationsleitung zu generieren, der proportional zum Leitwert eines Stromsetzwiderstandes ist, die Strommesseinrichtung erfindungsgemäß einen Stromspiegel aufweist, der eingerichtet ist, den generierten Strom auf der Kommunikationsleitung zu spiegeln, die Strommesseinrichtung eingerichtet ist, den gespiegelten Strom in ein internes Messsignal mit einem von der Kommunikationsleitung unterschiedlichen Bezugspotential umzuwandeln, mindestens ein Lichtquellenmodul an den Ausgang anschließbar ist, wobei das mindestens eine Lichtquellenmodul den Stromsetzwiderstand aufweist, der an die Kommunikationsleitung anschließbar ist. Durch den erfindungsgemäßen Stromspiegel kann der zur Messung notwendige Potentialhub einfach und kostengünstig ausgeglichen werden. Der Potentialhub ist notwendig, da die meisten Leistungsstufen zur Strommessung einen Shunt, also einen Widerstand mit einem kleinen Ohmschen Widerstand verwenden, der üblicherweise zwischen die Schaltungsmasse und die gemeinsame Masseleitung der LED-Moduln geschaltet ist. Dadurch entsteht ein Potentialunterschied, der sonst zu erheblichen Meßfehlern führen würde.

Der Stromspiegel ist durch einen ersten Transistor und einen zweiten Transistor gebildet, wobei die Transistoren bevorzugt erste und zweite Emittergegenkoppelwiderstände aufweisen. Diese Topologie ist einfach und kostengünstig in der Herstellung, und für die zu bewältigende Aufgabe völlig ausreichend in Bezug auf die Meßgenauigkeit.

In einer bevorzugten Ausführungsform sind die Steuerelektroden des ersten Transistors und des zweiten Transistors miteinander verbunden, die Bezugselektrode des ersten Transistors ist über den ersten Emittergegenkoppelwiderstand mit einer Versorgungsspannung verbunden, die Bezugselektrode des zweiten Transistors ist über den zweiten Emittergegenkoppelwiderstand mit der Versorgungsspannung verbunden, die Arbeitselektrode des ersten Transistors ist mit der Kommunikationsleitung verbunden, und die Arbeitselektrode des zweiten Transistors ist mit einem Meßwiderstand verbunden. Einen Stromspiegel in dieser Topologie ist besonders einfach und kostengünstig herzustellen.

Besonders bevorzugt wird die Spannung an der Steuerelektrode des ersten Transistors des Stromspiegels derart eingestellt, dass die Spannung auf der Kommunikationsleitung einer vorbestimmten Spannung entspricht. Damit dient der Stromspiegel einerseits der Potentialverschiebung des Bezugspotentials des gemessenen Stromes, andererseits aber gleichzeitig auch als Spannungsquelle für die Generierung des zu messenden Stromes. Die Funktion der Spannungsquelle kann durch einige wenige Teile einfach und kostengünstig hergestellt werden.

In erfindungsgemäß wird die Funktion der Spannungsquelle dadurch hergestellt, dass die Strommesseinrichtung weiterhin einen dritten Transistor aufweist, dessen Arbeitselektrode mit der Steuerelektrode des ersten Transistors verbunden ist, dessen Bezugselektrode mit der Arbeitselektrode des ersten Transistors verbunden ist, und dessen Steuerelektrode mit dem Mittelpunkt einer Serienschaltung eines Widerstandes und einer Zenerdiode verbunden ist, wobei die Serienschaltung zwischen die Versorgungsspannung und einen Ausgangsanschluss geschaltet ist. Durch diese drei Bauteile kann die Funktion schon mit ausreichender Genauigkeit erfüllt werden. Die drei Bauteile benötigen wenig Platz auf der Leiterplatte und sind kostengünstig.

In einer Ausführungsform wird die Funktion der Spannungsquelle dadurch hergestellt, dass die Steuerelektrode des dritten Transistors mit dem Mittelpunkt eines Spannungsteilers verbunden ist, der parallel zur Zenerdiode geschaltet ist. Damit kann die Genauigkeit gegenüber der vorhergehenden Ausführungsform erhöht werden.

In einer weiteren Ausführungsform wird die Funktion der Spannungsquelle dadurch hergestellt, dass die Zenerdiode eine einstellbare Zenerdiode ist, deren Steuerelektrode mit dem Mittelpunkt eines Spannungsteilers verbunden ist, der zwischen die Kommunikationsleitung und einen Ausgang des Netzteils geschaltet ist. Diese Ausführungsform bietet eine weitere Steigerung der Präzision der Ausgegebenen Spannung.

Eine weitere erfindungsgemäße Ausführungsform ist es, dass die Strommesseinrichtung weiterhin einen dritten Transistor aufweist, dessen Arbeitselektrode über einen Widerstand mit der Steuerelektrode des ersten Transistors verbunden ist, dessen Bezugselektrode mit einer internen Schaltungsmasse verbunden ist, und dessen Steuerelektrode mit einem Mikrokontroller verbunden ist. In dieser Ausführungsform wird die Spannungsquelle durch einen Mikrokontroller gesteuert, der üblicherweise im Netzteil sowieso zur Steuerung des Leistungsteils vorhanden ist. Dazu werden weiterhin die Spannung auf der Kommunikationsleitung und die Spannung auf der gemeinsamen Masse in den Mikrokontroller eingegeben, so dass er die Spannung auf der Kommunikationsleitung auf die gemeinsame Masse bezogen messen kann. Da der Mikrokontroller das Potential auf der gemeinsamen Masse üblicherweise auch für den Leistungsteil benötigt, ist nur ein zusätzlicher Analog-Digital-Wandler notwendig. Der dritte Transistor wird dabei mit einer Pulsweitenmodulation (PWM) angesteuert, um die Spannung auf der Kommunikationsleitung einzustellen. Durch das digitale Regelverfahren kann die Meßschaltung auch getaktet betrieben werden, also z.b. nur einmal pro Sekunde für eine kurze Meßperiode eingeschaltet werden. Dadurch kann der Stromverbrauch der Anordnung gesenkt werden. Zur Durchführung einer Messung genügt es dabei, die Meßschaltung mit dem Stromspiegel für wenige Millisekunden zu aktivieren.

Eine weitere Ausführungsform ist es, dass die Strommesseinrichtung eingerichtet ist, die Versorgungsspannung der Strommesseinrichtung aus der Ausgangsspannung des Netzteils zu generieren. Dadurch sinkt der Aufwand für die Herstellung des Netzteils weiter ab, da eine zusätzliche Stromversorgung für den Stromspiegel entfällt.

Eine weitere Ausführungsform ist es, dass die Strommesseinrichtung eingerichtet ist, die aus der Ausgangsspannung generierte Versorgungsspannung zu filtern und/oder in der Spannung zu stabilisieren. Dies hat den Vorteil, dass sich bei getakteten Betrieb der Meßschaltung und hohen Dimmstellungen der angeschlossenen Lichtmoduln keine sichtbaren Artefakte aufgrund der Taktung der Meßschaltung ergeben.

In einer bevorzugten Ausführungsform sind mehrere Lichtquellenmoduln parallel geschaltet an das Netzteil anschließbar.

Das Lichtquellenmodul weist zum Anschließen an das oben beschriebene Netzteil einen Eingang und eine Kommunikationsleitung auf, sowie einen Stromsetzwiderstand zum Einstellen des an das Lichtquellenmodul angelegten Stromes. Dadurch ist es in der Lage, dem Netzteil seinen Strombedarf über die Kommunikationsleitung mitzuteilen

In einer Ausführungsform weist das Lichtquellenmodul weiterhin eine Temperaturrückregelungseinheit auf. Dadurch kann es bei einer Übertemperatursituation selbsttätig den angelegten Strom zurückregeln, so dass das Modul in der Lage ist, sich selbst zu schützen.

Eine erfindungsgemäß Beleuchtungsanlage, weist ein oben beschriebenes Netzteil, sowie mindestens ein ebenfalls oben beschriebenes Lichtquellenmodul auf, welches an das Netzteil angeschlossen ist.

Das erfindungsgemäße Verfahren zum Einstellen eines Stromwertes für mindestens ein an ein Netzteil angeschlossenes Lichtquellenmodul ist durch folgende Schritte gekennzeichnet:

- Anlegen einer Messspannung an eine Kommunikationsleitung durch einen Stromspiegel,
- Spiegeln des in der Kommunikationsleitung fließenden Stromes,
- Umwandeln des gespiegelten Stromes in ein internes Messsignal mit einem von der Kommunikationsleitung unterschiedlichen Bezugspotential,
- Bewerten des internen Messsignals,
- Einstellen eines Betriebsstromes am Ausgang des Netzteiles anhand des bewerteten Messsignals.

In einer Ausführungsform des erfindungsgemäßen Verfahrens ist der in der Kommunikationsleitung fließende Strom proportional zum Leitwert eines Stromsetzwiderstandes des mindestens einen Lichtquellenmoduls.

Weitere vorteilhafte Weiterbildungen und Ausgestaltungen der erfindungsgemäßen Beleuchtungsanlage mit dem Erfindungsgemäßen Netzteil und dem erfindungsgemäßen Lichtquellenmodul ergeben sich aus weiteren abhängigen Ansprüchen und aus der folgenden Beschreibung, insbesondere aus der Kombination von Details aus verschiedenen Abschnitten der folgenden Beschreibung.

## Kurze Beschreibung der Zeichnung(en)

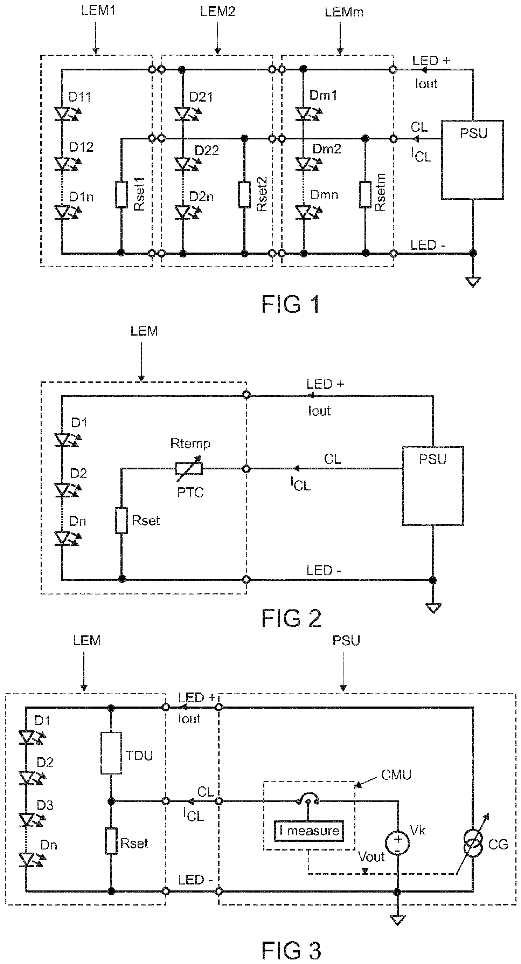

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sein können. Die in den Figuren 1 bis 10 dargestellten und erläuterten Ausführungsformen weisen dabei einen rein illustrativen Charakter auf und sind nicht Teil der Erfindung. Dabei zeigen:

Fig.1     das Konzept zur Parallelschaltung der Stromsetzwiderstände,

Fig.2     eine sehr einfache Lösung für die Temperaturrückregelung,

Fig.3     das Gesamtkonzept mit der Temperaturrückregelungseinheit TDU,

Fig.4     zwei einfache Ausführungsformen für die TDU,

Fig.5     eine einfache Ausführungsform der netzgeräteseitigen Schnittstelle, wobei Vout eine netzgerätinterne Spannung ist, die durch den Strom in der Kommunikationsleitung CL entsteht und als Sollwert für den Regelkreis des vom Netzgerät gelieferten LED-Betriebsstroms dient,

Fig.6     ein Kennlinienfeld für den Schaltkreis gemäß Fig.5,

Fig.7     ein Kennlinienfeld der Strommesseinrichtung,

Fig.8     ein Blockschaltbild einer erfindungsgemäßen Beleuchtungsanlage,

Fig. 9     ein Ablaufdiagramm, wie es ein Mikrokontroller in dem Netzteil ausführt,

Fig. 10     ein Beispiel einer schaltungstechnische Ausgestaltung der in Fig. 8 bezeichneten relevanten Funktionsblöcke,

Fig. 11     ein Blockschaltbild der digitalen Ausführungsform der erfindungsgemäßen Beleuchtungsanlage mit einer vereinfachten Auswerteschaltung,

Fig. 12     eine erste Ausführungsform der vereinfachten Strommesseinrichtung CMU,

Fig. 13     eine zweite Ausführungsform der vereinfachten Strommesseinrichtung CMU,

Fig. 14     eine dritte Ausführungsform der vereinfachten Strommesseinrichtung CMU,

Fig. 15a     ein Blockschaltbild der digitalen Ausführungsform der erfindungsgemäßen Beleuchtungsanlage mit einer vereinfachten Auswerteschaltung,

Fig. 15b     eine vierte Ausführungsform der vereinfachten Strommesseinrichtung CMU,

Fig. 16     eine fünfte Ausführungsform der vereinfachten Strommesseinrichtung CMU,

Fig. 17     eine sechste Ausführungsform der vereinfachten Strommesseinrichtung CMU,

Fig. 18     eine siebte Ausführungsform der vereinfachten Strommesseinrichtung CMU.

**Analoge Ausführung der Erfindung**

Im Folgenden werden mehrere Ausführungsformen der Schaltungsanordnung beschrieben. Das dahinter liegende Konzept ist immer eine Dreileitungsschnittstelle bzw. eine "analoge Ein-Draht-Schnittstelle", an der ein Lichtquellenmodul oder mehrere Lichtquellenmodule parallel geschaltet und mit einem einzigen Netzgerät verbunden sein können, und die momentanen Erfordernisse jedes Lichtquellenmoduls in Echtzeit erfüllt werden. Die erfindungsgemäße Schaltungsanordnung verwendet einen Setzwiderstand, um einen Stromwert zu definieren. Zur Messung dieses Setzwiderstandes werden verschiedene beispielhafte Ausführungsformen beschrieben. In den Fig. 1 bis 7 wird im Folgenden eine analoge Ausführungsform der Schnittstelle beschrieben.

**Fig. 1** zeigt das generelle Konzept der Setzwiderstände für die Betriebsstromnennwerte. Es sind drei Lichtquellenmodule LEM gezeigt, die an einem einzigen Netzgerät PSU angeschlossen sind. Die Verbindung besteht aus drei Leitungen: Eine Versorgungsleitung LED+, eine gemeinsame Masseleitung LED- und eine Kommunikationsleitung CL. Jedes Lichtquellenmodul enthält mindestens eine LED-Kette. Die LED-Kette umfasst eine Vielzahl von LEDs. Eine Vielzahl im Sinne der Erfindung bedeutet, dass mindestens drei LED in Serie verbunden sind. Jedes Lichtquellenmodul oder jede LED-Kette enthält einen individuell zugeordneten Setzwiderstand Rset zum Definieren des jeweils gültigen Betriebsstromnennwertes, den sogenannten Stromsetzwiderstand Rsetm. Der Stromsetzwiderstand Rsetm koppelt oder die Stromsetzwiderstände Rset1, Rset2, Rsetm koppeln die gemeinsame Masseleitung LED- an die Kommunikationsleitung CL außerhalb des Netzgeräts. Dies führt zu einer Parallelschaltung aus allen im System vorhandenen Stromsetzwiderständen Rset1, Rset2, Rsetm, so dass das Netzgerät PSU den Ersatzwiderstand Rset dieser Parallelschaltung misst. Das Konzept besagt, dass das Netzgerät PSU keine Spannung liest wie im Stand der Technik, sondern einen Strom als Stellvertreter für den Leitwert dieses Ersatzwiderstands. Dann wird ein inverses Gesetz auf den Wert des Ersatzwiderstandes angewandt, um den Wert des vom Netzgerät gelieferten LED-Betriebsstroms vorzugeben. Das Gesetz ist wie folgt:

$$Iout = Kv \,/\, Rset$$

Kv hat die Dimension einer Spannung. Rset ist der Wert, der durch einen Stromsetzwiderstand Rsetl oder durch die Parallelschaltung mehrerer Stromsetzwiderstände Rset1, Rset2, Rsetm gebildet wird. Dadurch ist der Wert des vom Netzgerät gelieferten Betriebsstroms umgekehrt proportional zum Stromsetzwiderstand Rsetl oder Ersatzwiderstand Rset von dem mindestens einen Lichtquellenmodul, d.h. je niederohmiger der Ersatzwiderstand, desto höher der Ausgangsstrom des Netzgeräts PSU. Die Anforderung an den Wert des Betriebsstroms, letztendlich der Summe der Stromnennwerte jedes einzelnen Lichtquellenmoduls zu entsprechen, wird durch das bekannte Ohmsche Gesetz an sich erfüllt.

**Fig. 2** zeigt ein Konzeptschaltbild einer Schnittstelle mit der Fähigkeit zur Thermorückregelung. Eine sehr einfache Thermorückregelung wird durch Platzieren eines PTC-Elements in Serie zu Rset hinzugefügt. Sobald die Temperatur des Lichtquellenmoduls LEM ansteigt, nimmt auch der Widerstandswert des PTCs zu und führt zu einem kleineren Stromnennwert für dieses Modul. Der Nachteil solch eines Arrangements ist, dass es nicht angemessen für eine Mehrfachverbindung von Lichtquellenmoduln sein wird, weil der Effekt eines erhitzten alleinstehenden PTCs vom Leitwert der parallelgeschalteten Stromsetzwiderstände Rset nur den Beitrag seines zugehörigen erhitzten Moduls wegnehmen würde, was für eine effektive Reduzierung der Temperatur des betroffenen Lichtquellenmoduls nicht ausreichend ist. Die parallelgeschalteten kälteren Stromsetzwiderstände wirken nämlich der temperaturbedingten Widerstandserhöhung eines einzelnen Stromsetzwiderstands entgegen. Der Dominanzcharakter der Temperaturrückregelung ist damit nicht gewährleistet. Dennoch könnte solch eine Lösung für sehr kostengünstige Anwendungen verwendet werden, wenn eine Teilstromreduktion im Falle eines Temperaturanstiegs noch akzeptabel ist, beispielsweise bei wenigen von einem Netzgerät versorgten Lichtquellenmoduln oder bei guter thermischer Kopplung der Lichtquellenmodule untereinander. Weiterhin hat ein einfaches thermosensitives Element in Serie zum Stromsetzwiderstand den Nachteil, seinen Leitwert und damit den Wert für den Strom des Lichtquellenmoduls kontinuierlich, quasi linear oder allmählich zu reduzieren, ohne einen genauen Ausgangspunkt für die Thermorückregelung zu definieren, selbst wenn einige PTC-Elemente ein sehr steiles Verhalten um ihre Nenn-Trigger-Temperatur herum zeigen. Also würde das "nominale" Stromsetzen von einer "parasitären" Wirkung des Rückregelungselements korrumpiert werden.

**Fig. 3** zeigt das Konzept der Dreileitungsschnittstelle mit einer Thermorückregelungseinheit TDU auf dem Lichtquellenmodul. Diesem Konzept liegt ein anderer Ansatz zugrunde, nämlich auf dem Lichtquellenmodul eine Stromquelle für die Thermorückregelungseinheit TDU vorzusehen. Diese Stromquelle ist mittels eines geeignet verschalteten thermosensitiven Elements temperaturgesteuert und wird, um zusätzliche Leitungen für die Schnittstelle zu vermeiden, entweder direkt von der Versorgungsleitung LED+ oder von einem Mittenabgriff aus der mindestens einen LED-Kette des betrachteten Lichtquellenmoduls mit der nötigen Hilfsenergie versorgt. Die Stromquelle umfasst einen Verstärker und einen temperaturempfindlichen Widerstand, durch den ein Eingangsstrom für den Verstärker fließt, der diesen Eingangsstrom zum Strom ITDU der Stromquelle verstärkt. Die Stromquelle weist eine Ansprechschwelle auf, die jede Generierung eines Stroms ITDU hemmt, solange eine gewisse Übertemperatur des Lichtquellenmoduls nicht erreicht ist. Dadurch ist eine Zunahme des verstärkten Stroms mit der Temperatur (Steigung von ITDU) steil genug, damit es einem Gesamtsystem bestehend aus einem Netzgerät und mehreren thermisch unabhängigen Lichtquellenmoduln erfolgreich gelingt, die Maximaltemperatur eines einzelnen überhitzten Lichtquellenmoduls zu begrenzen, ohne dabei aufgrund Wärmeübergangzeitverschiebungen Instabilitäten auszulösen. Die Stromquelle für den Strom IDTU ist in der Lage, das vom Ersatzwiderstandswert Rset aller parallelgeschalteten Stromsetzwiderstände gebildete Signal völlig außer Kraft zu setzen: auf solch eine Weise kann sie das Gesamtsystem und insbesondere das Lichtquellenmodul, auf dem sie integriert ist, sogar im Fall einer Lichtquellenmodul-Mehrfachverbindung bei gleichzeitiger stark konzentrierter Überhitzung sicher schützen.

Mit der oben beschriebenen temperaturabhängigen Stromquelle ergibt sich ein weiteres Problem. Es ist notwendig, den Widerstand Rset des Moduls Nr. x unabhängig von der tatsächlichen Temperatur des Moduls x zu messen, mithin unabhängig von dem von der Stromquelle gelieferten Strom. Es muss festgelegt werden, wie der Widerstand Rset gemessen wird, um die Auswirkung der Stromquelle voraussagbar zu machen. In der erfindungsgemäßen Schaltungsanordnung wird eine feste Spannungsquelle Vk verwendet, um den Widerstandswert dadurch zu messen, dass die Schaltungsanordnung die Spannung der Spannungsquelle über dem Stromsetzwiderstand Rset (oder der Parallelschaltung mehrerer Stromsetzwiderstände Rset) anlegt, und den dadurch verursachten Stromfluss liest. Die Spannung der Spannungsquelle wird also an der netzgeräteseitigen Klemme für die Kommunikationsleitung CL ausgegeben. Dies wiederum führt die Temperaturrückregelungseinheit TDU in direkte Interaktion mit dem Strom, der mittels Vk / Rset definiert ist, und löst die schließlich gestellte Aufgabe der dominanten Temperaturrückregelung.

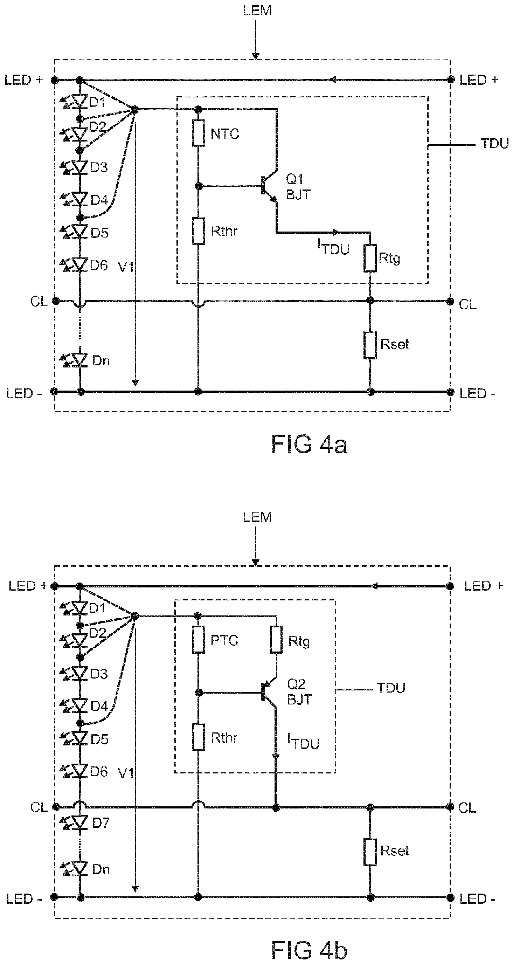

**Fig. 4a** stellt eine erste Ausführungsform des Lichtquellenmoduls dar, das die Schnittstelle mit nur einem Bipolartransistor, einem NTC-Element und einigen hinzugefügten Widerständen bereitstellt. Die Schaltung enthält eine Spannungsquelle V1, die von der Versorgungsleitung LED+ des Lichtquellenmoduls abgeleitet ist. LED haben eine ziemlich stabile Flussspannung, so dass diese als ausreichend guter Spannungsquellenersatz dienen kann. Abhängig von der für die TDU erforderlichen Speisespannung kann die Spannungsquelle V1, immer auf die gemeinsame Masseleitung LED- bezogen, an einen Abgriff zwischen zwei Abschnitten der Vielzahl von in Serie geschalteten LED angeschlossen sein. Dies bedeutet, dass die Spannung V1 auf eine Weise eingestellt werden kann, wie es einem Vielfachen der Flussspannung einer einzelnen LED entspricht. Parallel zu dieser Spannung V1 befindet sich eine Reihenschaltung aus dem NTC und einem Schwellenwiderstand Rthr. Die Basis eines NPN-Bipolartransistors (BJTs) Q1 ist mit dem Knoten zwischen dem NTC und Rthr verbunden. Der Kollektor von Q1 ist mit der Spannung V1 verbunden. Der Emitter von Q1 ist mit der Kommunikationsleitung CL über einen Emitterwiderstand Rtg gekoppelt. All diese bis hierher beschriebenen Bestandteile der Fig. 4a formen die Thermorückregelungseinheit TDU.

Der mindestens eine Stromsetzwiderstand Rset ist zwischen die Kommunikationsleitung CL und die gemeinsame Masseleitung LED- geschaltet.

In dieser Schaltung wird das Emitterpotential von Q1 auf eine Spannung (hier Vk), die vom Netzgerät PSU vorgegeben ist, angehoben, wodurch die Schwelle realisiert wird, unter der kein Strom ITDU in die Kommunikationsleitung CL injiziert wird. Wenn die Temperatur ansteigt, beginnt der NTC, das Basispotential von Q1 anzuheben, bis der NPN-Transistor Q1 in den aktiven Bereich gekommen ist. Ab jetzt definiert der Emitterwiderstand Rtg die Verstärkung der Thermorückregelungseinheit TDU und damit die Zunahme des injizierten Stroms ITDU über der Zunahme der Temperatur. Bezogen auf die Spannungen V1 und Vk bestimmen der Widerstand Rthr und der Widerstandswert des NTCs bei der als Auslöseschwelle für die TDU spezifizierten Temperatur, den Einsatzpunkt für die Temperaturrückregelung. Ein weiterer Vorteil dieser Anordnung ist die erzielbare gute Linearität des Stroms ITDU über der Temperatur.

Einer der interessantesten Vorteile der Erfindung, neben der Einfachheit der Realisierung auf Seiten des Lichtquellenmoduls, ist ihre Eignung, durch Einstellung der gewünschten Genauigkeiten und Merkmale allein durch entsprechende Schaltkreiskomplexität der netzgeräteseitigen Schnittstelle in Systemen unterschiedlicher Qualitätsstufen anwendbar zu sein. Mit anderen Worten ist es möglich, die netzgeräteseitige Leseschnittstelle entsprechend der erforderlichen Genauigkeit und/oder weiterer nötiger Merkmale auszubauen.

Fig. 4b zeigt als zweite Ausführungsform der Schnittstelle auf Seiten des Lichtquellenmoduls LEM eine komplementäre Realisierung. Hier wird ein PNP-Bipolartransistor Q2 zusammen mit einem PTC verwendet. Ein PTC ist ein temperaturempfindlicher Widerstand mit einem positiven Temperaturkoeffizienten. Wie in Fig.4a ist die Spannung V1 entweder von der kompletten Anzahl der in Serie geschalteten LEDs oder von einem Teil derselben abgeleitet. In Gegensatz zur Ausführungsform von Fig.4a bildet der Kollektor von Q2 den Stromquellenanschluss mit dem Strom ITDU, der mit CL verbunden ist. Auf diese Weise ist die Thermorückregelungsschwelle nicht mehr abhängig von Vk, sondern nur noch von der gut reproduzierbaren Spannung V1, sowie von den Werten des Spannungsteilers geformt durch den temperaturempfindlichen Widerstandswert des PTCs und den Schwellenwiderstand Rthr. Wie in Fig.4a bestimmt der Emitterwiderstand Rtg die Verstärkung der Thermorückregelungseinheit TDU.

Es bedarf keiner weiteren Figur, um zu erklären, dass bei Vertauschen der Reihenfolge der Elemente in dem Spannungsteiler, der die Einsatzschwellentemperatur definiert, jeweils der gemäß Fig.4a oder Fig.4b komplementäre Bipolartransistor zum Einsatz kommt. Besonders interessant ist die Kombination aus an V1 gekoppeltem PNP-Transistor in Verbindung mit einem NTC, der mit der Basis des Transistors und der gemeinsamen Masseleitung LED-verbunden ist.

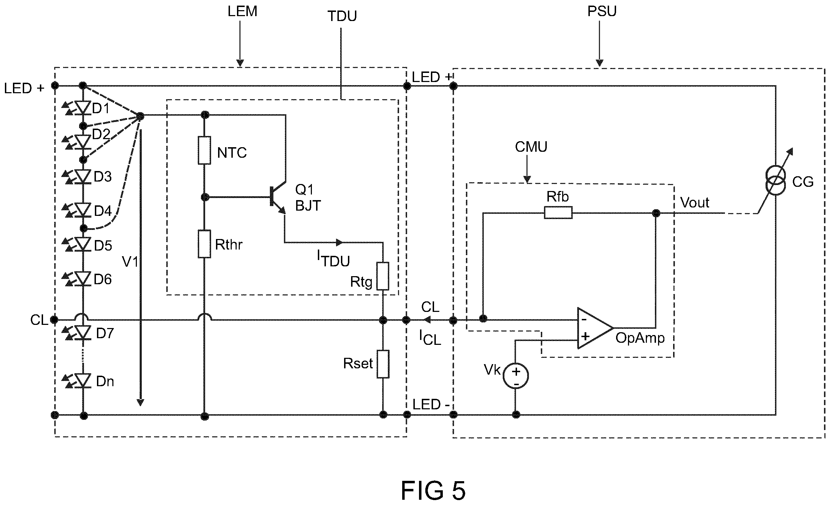

Fig. 5 zeigt eine Ausführungsform der Schnittstelle des Netzgeräts PSU. Dies ist eine sehr einfache Schaltungsanordnung für einfachere Netzgeräte, wo keine hohe Genauigkeit erforderlich ist. Aufgrund des Erfordernisses von möglichst wenigen Verbindungsleitungen und des Konzepts einer gemeinsamen Masseleitung LED-ergibt sich das Problem des Spannungsabfalls auf dieser gemeinsamen Masseleitung, verursacht durch den Betriebsstrom des mindestens einen Lichtquellenmoduls. Die Ausführungsform übernimmt eine sehr einfache Schaltung basierend auf einem einzelnen Operationsverstärker ohne jeden Ausgleich eines Spannungsversatzes auf der gemeinsamen Masseleitung aufgrund des Lichtquellenmodulstroms. Besagter einziger Operationsverstärker OpAmp der Netzgeräteschnittstelle ist an seinem negativen Eingang mit der Kommunikationsleitung CL und an seinem positiven Eingang mit der schon bekannten Spannung Vk verbunden, die wegen ihres direkten Bezugs auf die gemeinsame Masseleitung LED- die Referenz für die Schnittstellenschaltung des Netzgeräts PSU bildet. Der Verstärkerausgang ist über den Strommesswiderstand Rfb mit dem negativen Eingang verbunden, wodurch die obligatorische Gegenkopplung des Operationsverstärkers erreicht ist. Sein Verhalten, die Potenziale seiner beiden Eingänge einander angleichen zu wollen, erzeugt erstens die Referenzspannung Vk auf der Kommunikationsleitung CL und generiert zweitens ein internes Messsignal Vout, dessen Wert der Spannung Vk entspricht, erhöht um den Messstrom Icl multipliziert mit dem Strommesswiderstand Rfb. Dieses Messsignal Vout wird verwendet, um den LED-Betriebsstrom Iout einzustellen, der vom Leistungsteil CG an den Ausgang des Netzgeräts geliefert wird. Der Ausgang des Netzgeräts ist mit LED+ und LED- verbunden, also mit den Versorgungsleitungen des mindestens einen Lichtquellenmoduls.

Der Messfehler kann durch Wählen eines adäquaten Werts für Vk auf einen für die jeweilige Anwendung geeigneten Wert reduziert werden. In einer beispielhaften Ausführungsform wird der maximale Messfehler auf der Masseleitung auf 50 mV festgelegt. Dies entspricht einem Ampere auf einer 50-mOhm-Verbindung. Diese Festlegung des Messfehlers ergibt 5 V als Kleinstwert für die Spannung Vk, damit Vout einen durch den Spannungsabfall verursachten Fehler unter 1% hat.

Um eine bessere Genauigkeit zu erreichen, können andere Kompensationstechniken gegen den Spannungsabfall auf der gemeinsamen Masseleitung angewandt werden. Eine Technik ist das Abschalten des Betriebsstroms für das mindestens eine Lichtquellenmodul vor dem Ausmessen von Rset. Dieses Ausmessen kann beim Einschalten des Gesamtsystems durch eine Freigabeverzögerung des Betriebsstroms durchgeführt werden.

Zu beachten ist, dass bei Abschaltung der Kette von Lichtquellenmoduln durch Entfernen der Versorgung auf der Versorgungsleitung LED+ der aktuelle Stromlevel auf der Kommunikationsleitung CL nicht vom Temperatursignal beeinflusst wird. Dies ist kein Nachteil, weil diese Information nicht erforderlich ist, wenn die Lichtquellenmodule völlig ausgeschaltet sind, vielmehr ist es ein Weg, den Wert von Rset nicht nur mit einer höheren Genauigkeit, sondern auch ohne jede Abweichung durch mögliche Überhitzung zu lesen. Das Auslesen geschieht also ohne jede durch die jeweilige Lichtquellenmodultemperatur verursachte Abweichung.

Die reine Temperaturinformation hingegen ist verfügbar durch einfaches Trennen der Vergleichsspannung Vk vom positiven Eingang des Operationsverstärkers OpAmp und durch Verbindung dieses Eingangs mit der gemeinsamen Masseleitung. Dadurch wird die Spannung auf der Kommunikationsleitung CL annähernd zu null, und der Strom in CL somit unabhängig vom Wert von Rset. Damit ist der Strom in CL nur noch eine Funktion von der Lichtquellenmodultemperatur. Im Falle von Mehrfachverbindungen, also mehreren angeschlossenen Moduln ist der Strom eine Funktion des Moduls mit der höchsten Temperatur. Dies versetzt das die Lichtquellenmodule betreibende Netzgerät in die Lage, den Betriebsstrom zum diesen Moduln von vorne herein zu senken und die aktuelle Arbeitstemperatur der Lichtquellenmodule zu bestimmen, sogar dann, wenn es nicht überhitzt ist. Für eine hohe Messgenauigkeit der Temperatur ist es von Vorteil, wenn Rset bekannt ist.

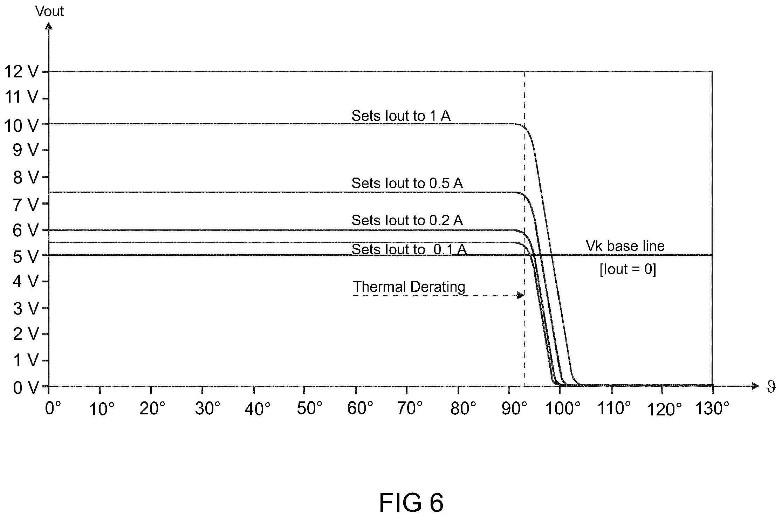

**Fig. 6** zeigt ein temperaturabhängiges Kennlinienfeld des Netzgeräts. Die Kurvenschar zeigt die interne Steuerspannung Vout des Netzgeräts über der Temperatur des mindestens einen Lichtquellenmoduls. Die einzelnen Kurven beziehen sich auf den Strombedarf des gegenwärtig angeschlossenen mindestens einen Lichtquellenmoduls. Gut ersichtlich setzt die Thermorückregelung bei einer Temperatur von etwa 93°C ein, bis bei etwa 100°C bis 104°C die Versorgung mit dem Betriebsstrom vollständig abgeschaltet ist.

Die Funktion der Schnittstelle wird im Folgenden anhand eines praktischen Beispiels erklärt. Wie in der Abbildung gesehen werden kann, führt ein internes Messsignal Vout von 10 V zu einem Ausgangsstrom von 1 A. Die Schnittstelle soll auf eine Weise gestaltet werden, dass ein Leitwert von 1 mS für Rset in einem Ausgangsstrom von 1 A resultiert. Gemäß **Fig. 6** ist die Spannungsquelle Vk auf 5 V eingestellt. Dies bedeutet, dass 5 V an Rset angelegt werden (siehe **Fig. 5**). Der Operationsverstärker arbeitet auf eine Weise, die Pegeldifferenz an seinen beiden Eingängen zu minimieren, was durch seine Gegenkopplung über Rfb ermöglicht wird. Wenn also Vk 5 V entspricht, bedeutet dies, dass 5 V auch am negativen Eingang des Operationsverstärkers anliegen werden. Dies führt zu 5 V am jeweiligen Stromsetzwiderstand Rset und zu einem Strom durch die Kommunikationsleitung CL von 5 V/1 kOhm = 5mA. Diese 5 mA durch die Kommunikationsleitung CL fließen ebenso durch den Strommesswiderstand Rfb, weil der Eingang des Operationsverstärkers eine hohe Impedanz hat und deshalb eine vernachlässigbare Stromaufnahme. Weil die Spannung des internen Messsignals Vout entsprechend **Fig. 6** für den gewünschten Betriebsstrom 10 V betragen soll, muss die Spannung über dem Strommesswiderstand Rfb ebenfalls 5 V sein, was einen Widerstandswert von 1 kOhm respektive 1 mS für Rfb ergibt. Entsprechend diesem Beispiel würde ein Lichtquellenmodul mit einem Strombedarf von 2 A einen Stromsetzwiderstand Rset von 2 mS bzw. 500 Ohm aufweisen.

Wie schon erwähnt, hat die Dreileitungsschnittstelle den Nachteil, dass das Messsignal mit dem durch den Betriebsstrom des mindestens einen Lichtquellenmoduls verursachten Spannungsabfall auf der gemeinsamen Masseleitung LED- verfälscht wird. Der Messstrom wird ja durch die gemeinsame Masseleitung LED- zusammen mit dem LED-Betriebsstrom geführt.

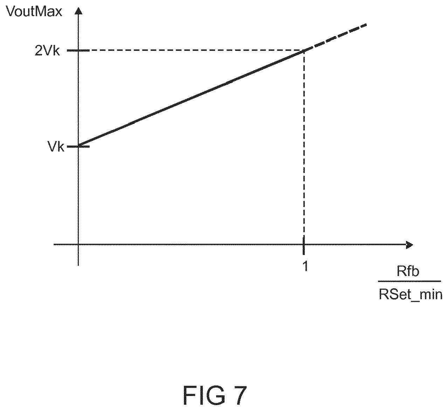

**Fig. 7** zeigt die Kennlinie der Strommesseinrichtung CMU, die vor allem Abhängig von dem Strommesswiderstand Rfb ist. Die Kennlinie zeigt das interne Signal Vout des Ausganges der Strommessungseinheit CMU gegen den normalisierten Strommesswiderstand Rfb/RsetMin. RsetMin ist der minimale zulässige Wert des mindestens einen Stromsetzwiderstandes, der zum maximal spezifizierten Ausgangsstrom IoutMax des Netzgeräts PSU führt. Somit liefert das Netzgerät bei dem dargestellten Wert 1, wenn Rfb = Rsetmin, seinen maximale Strom, bei gegebener Spannung des mindestens einen Lichtquellenmoduls also auch seine maximale Leistung an seinem Ausgang. Das zur maximalen Leistung gehörende interne Messsignal Vout ist 2*Vk, wie im Beispiel für Fig. 6 beschrieben.

### Digitale Ausführung der Erfindung

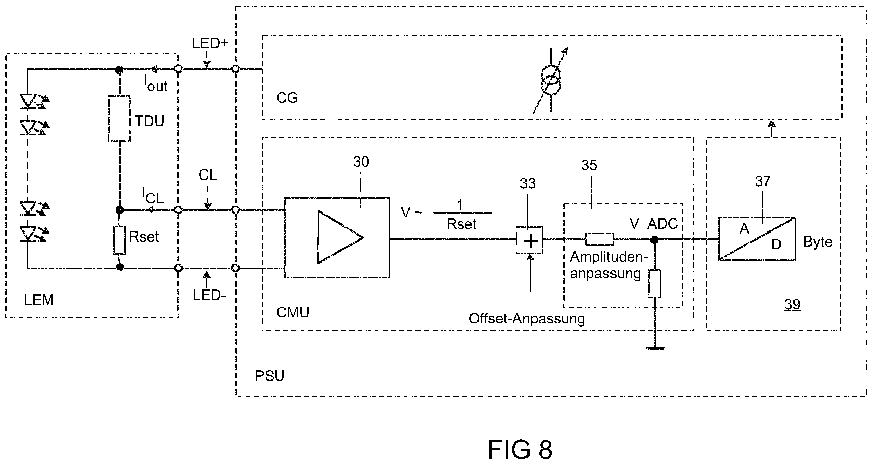

In den folgenden **Figuren 8** bis **10** wird nun eine digitale Ausführungsform der Erfindung beschrieben. Die folgenden Ausführungen beinhalten den Ausdruck "die Lichtquellenmodule LEM". Mit diesem Ausdruck soll mindestens ein Lichtquellenmodul LEM umfasst sein, es können aber auch mehrere Lichtquellenmodule LEM1 bis LEMm gemeint sein. Der Ausdruck umfasst alle Lichtquellenmodule, die an das Netzteil PSU angeschlossen sind. Jedes Lichtquellenmodul LEM1, LEM2..LEMm weist einen Stromsetzwiderstand Rset1, Rset2..Rsetm auf. Die Lichtquellenmodule werden parallel geschaltet an das Netzteil PSU angeschlossen. Damit werden die Stromsetzwiderstände Rset1, Rset2..Rsetm ebenfalls parallel geschaltet, und es ergibt sich ein resultierender Stromsetzwiderstand Rset. Mit Stromsetzwiderstand Rset wird also im Folgenden immer der resultierende Stromsetzwiderstand Rset aller angeschlossenen Lichtquellenmodule LEM bezeichnet.

**Fig. 8** zeigt ein Blockschaltbild der digitalen Ausführungsform der erfindungsgemäßen Beleuchtungsanlage. Der Widerstand Rsetl ist Teil des Lichtquellenmoduls LEM, die anderen Schaltungsteile befinden sich auf dem Netzteil PSU. Das Blockschaltbild bezieht sich also vor allem auf die relevanten Schaltungsteile im Netzteil PSU, die in der Lage sind, den Setzwiderstand Rset auszumessen und die Information in einen Strom für die LEDs des Lichtquellenmoduls LEM umzuwandeln. Dargestellt sind Teile der Strommesseinheit CMU, die für die Erfassung des eingeprägten Stromes und damit des Stromsetzwiderstand Rset zuständig ist.

Der Stromsetzwiderstand Rset ist an eine Verstärkerschaltung 30 angeschlossen, die eine Spannung in den Widerstand einprägt und den Strom am Stromsetzwiderstand Rset misst. Die Verstärkerschaltung gibt eine Spannung aus, die proportional zum Leitwert des Stromsetzwiderstandes Rset ist. Diese Spannung wird in eine Offset-Anpassungsschaltung 33 eingegeben, die eine angepasste Spannung dann wiederum in eine Amplituden-Anpassungsschaltung 35 eingibt. Hier wird die Spannung noch in der Amplitude angepasst, so dass der darauf folgende Analog-Digitalwandler 37, in den diese Spannung dann eingegeben wird, optimal ausgesteuert wird. Der Analog-Digital-Wandler 37 ist Teil eines Mikrokontrollers 39, der dem Netzteil PSU zuzuordnen ist. Der Mikrokontroller steuert dann ein Leistungsteil CG an, welches wiederum den entsprechenden Strom am Ausgang des Netzteils PSU einstellt.

Diese Anpassungen des gemessenen Stromes in den Stromsetzwiderstand Rsetl sind hilfreich, um die erfindungsgemäße Lösung möglichst effizient umsetzen zu können. Erfindungsgemäß wird nämlich nun nicht der gesamte Wertebereich des Analog-Digital-Wandlers 37 zur Messung des Widerstandes ausgenutzt, sondern nur ein Teilbereich, wohingegen die Randbereiche des Wertebereiches des Analog-Digital-Wandlers 37 zur Detektion von Fehlerfällen verwendet werden.

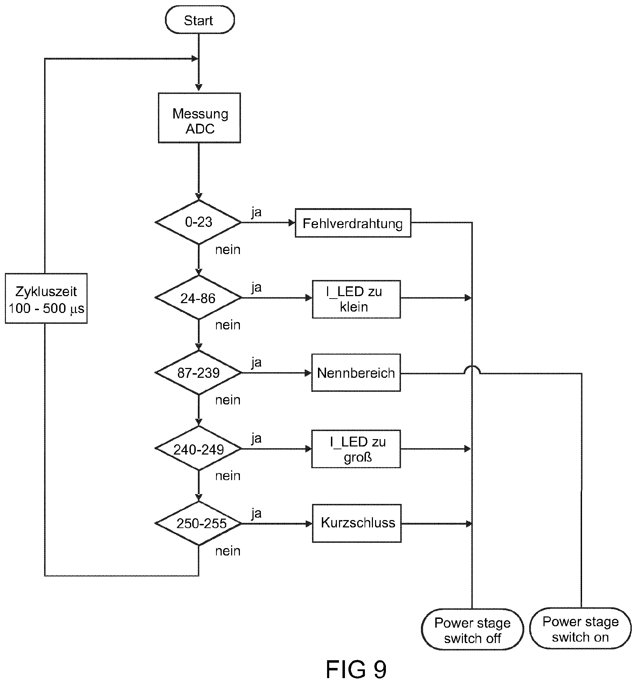

Fig. 9 zeigt ein Ablaufdiagramm, wie es ein Mikrokontroller 39 in dem Netzteil PSU ausführt. Zu Beginn, also wenn das Netzteil PSU eingeschaltet oder mit einer Netzspannung versorgt wird, ist der Leistungsteil CG im Netzteil PSU abgeschaltet. Der Leistungsteil CG ist für die Stromversorgung der an das Netzteil PSU angeschlossenen Lichtquellenmodule LEM zuständig. Der Wertebereich dieses beispielhaften Ablaufes ist für einen Analog-Digital-Wandler mit 8 Bit Auflösung ausgelegt. 8 Bit Auflösung bedeuten, dass der Analog-Digital-Wandler seinen Spannungsbereich in 256 Werten darstellen kann. Der Aussteuerbereich des Analog-Digital-Wandlers entspricht also dem Wert 256. Natürlich können ebenso Analog-Digital-Wandler mit anderer Auflösung verwendet werden, ohne die Erfindungsgemäße Lehre zu verlassen. Sehr verbreitet am Markt sind z.B. Mikrokontroller mit Analog-Digital-Wandlern mit einer Auflösung von 10 Bit. Diese können dann z.B. Werte zwischen 0 und 1023 erzeugen. Der Aussteuerbereich des Analog-Digital-Wandlers entspricht also dem Wert 1024. Der Analog-Digital-Wandler 37 gibt in der vorliegenden beispielhaften Ausführungsform demnach mit einer Messung einen Wert zwischen 0 und 255 aus, der mit der eingegebenen Spannung korreliert. Der Ablauf beginnt mit der Messung der in den Analog-Digital-Wandler 37 eingegebenen Spannung. Der Analog-Digital-Wandler liefert wie eben beschrieben einen Wert zwischen 0 und 255 zurück.

Dieser Wert wird nun in mehreren Schritten abgefragt und einem Bereich zugeordnet. In der vorliegenden Ausführungsform sind fünf verschiedene Bereiche Vorgesehen, die alle einem bestimmten Funktions- oder Fehlerfall zugeordnet werden können. Aufgrund des vom Analog-Digital-Wandler 37 gemessenen Wertes nimmt das Netzteil (PSU) entweder einen Funktionszustand oder einen Fehlerzustand ein. Der Funktionszustand ist dadurch gekennzeichnet, dass der Leistungsteil CG des Netzteiles PSU eingeschaltet wird und die angeschlossenen Lichtquellenmodule LEM mit Strom versorgt werden. Der Fehlerzustand ist dadurch gekennzeichnet, dass der Leistungsteil CG des Netzteiles PSU ausgeschaltet wird oder ausgeschaltet bleibt und die angeschlossenen Lichtquellenmodule LEM nicht mit Strom versorgt werden.

In der vorliegenden Ausführungsform ist der Bereich von 0 bis 23 dem Fehlerfall einer Fehlverdrahtung zuzuordnen, da der Stromsetzwiderstand Rset zu groß beziehungsweise nicht vorhanden ist. Der Leistungsteil CG des Netzteils PSU bleibt abgeschaltet, die Lichtquellenmodule werden nicht mit Betriebsstrom versorgt.

Der Bereich von 24 bis 86 ist dem Fehlerfall eines zu kleinen LED-Stromes zugeordnet, der Auftreten kann, wenn für das Netzteil PSU ungeeignete Lichtquellenmodule LEM angeschlossen werden, die einen zu geringen Betriebsstrom benötigen, den das Netzteil PSU nicht liefern kann. Der Leistungsteil CG des Netzteils PSU bleibt abgeschaltet, die Lichtquellenmodule werden nicht mit Betriebsstrom versorgt.

Der Bereich 87 bis 239 ist dem Funktionsfall Nennbetrieb zugeordnet. Dies ist der einzige Fall, in dem der Leistungsteil CG des Netzteiles PSU eingeschaltet wird, und die Lichtquellenmodule mit dem geforderten Betriebsstrom versorgt.

Der Bereich 240 bis 249 ist dem Fehlerfall eines zu großen LED-Stromes zugeordnet, der auftreten kann, wenn für das Netzteil PSU ungeeignete oder zu viele Lichtquellenmodule LEM angeschlossen werden, die einen zu großen Betriebsstrom benötigen, den das Netzteil PSU nicht mehr liefern kann. Der Leistungsteil CG des Netzteils PSU bleibt abgeschaltet, die Lichtquellenmodule werden nicht mit Betriebsstrom versorgt.

Der Bereich 250 bis 255 ist dem Fehlerfall eines Kurzschlusses zugeordnet. Der Stromsetzwiderstand Rset ist sehr klein oder nahe Null Ohm. Dies kann aufgrund eines defekten Moduls oder aufgrund einer Fehlverdrahtung auftreten. Der Leistungsteil CG des Netzteils PSU bleibt abgeschaltet, die Lichtquellenmodule werden nicht mit Betriebsstrom versorgt.

Nach einer Zykluszeit von 100us bis 500us wird eine neue Messung initiiert. Die angeschlossenen Lichtquellenmodule LEM werden also kontinuierlich auf Fehler überwacht. Sobald ein Fehler auftritt, wird der Leistungsteil CG im Netzteil PSU abgeschaltet, um die Lichtquellenmodule LEM und das Netzteil PSU zu schützen.

Ist die von den Lichtquellenmodulen LEM benötigte Stromhöhe von dem Netzteil PSU bereitstellbar, so wird diese vom Leistungsteil CG des Netzteils PSU bereitgestellt und an die Lichtquellenmodule LEM angelegt.

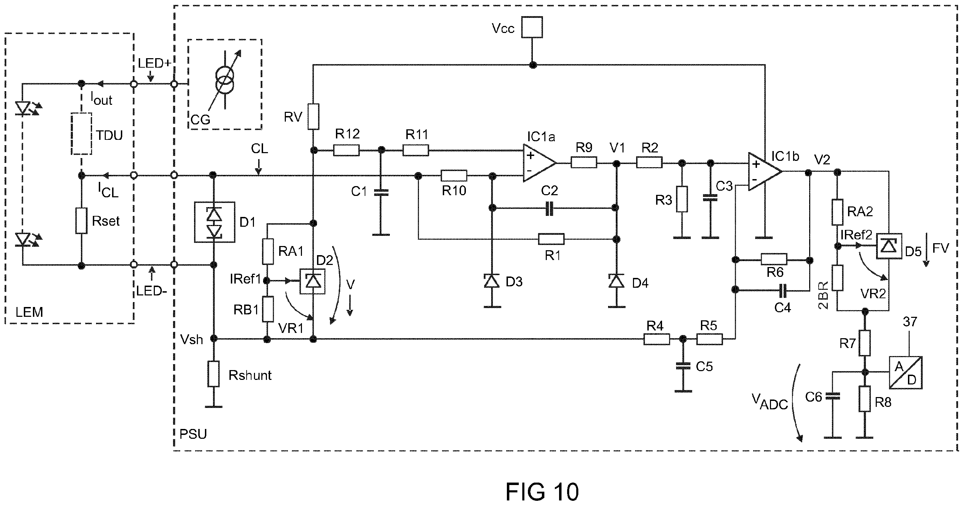

**Fig. 10** zeigt ein Beispiel einer schaltungstechnische Ausgestaltung der in **Fig. 8** bezeichneten relevanten Funktionsblöcke.

Auch hier gilt das erfindungsgemäße Prinzip, dass eine Spannung an die Kommunikationsleitung CL angelegt wird, und der Strom in dieser Leitung gemessen wird. Der durch die Kommunikationsleitung CL fließende Strom führt in vorliegender Beispielhafter Ausführungsform zur Einstellung eines LED-Stromes Iout: Iout = 1000 $I_{CL}$.

Jedes Netzteil hat in dieser beispielhaften Ausführungsform einen nominellen Aussteuerbereich Ioutmin - Ioutmax, was analog einem Bereich Rsetmax - Rsetmin des Stromsetzwiderstandes Rset entspricht.

Die linke Verstärkerstufe mit dem Operationsverstärker IC1a erzeugt die Spannung V1, die indirekt proportional ist zum Stromsetzwiderstand Rset bzw. direkt proportional zum Strom auf der Kommunikationsleitung $I_{CL}$.

Die von einer Referenzdiode D2 erzeugte Referenzspannung Vref beträgt 5,00V und liegt an dem Stromsetzwiderstand Rset an. Es gilt also folgende Beziehung:

$$I_{CL} = 5V \, / \, Rset \tag{1}$$

$$Iout = 5000V \, / \, Rset \tag{2}$$

$$V1 = Vref \, (1 + R1 \, / \, Rset) + Vsh = Vref + R1 \, I_{CL} + Vsh \tag{3}$$

Der Widerstand R1 wird so dimensioniert, dass die maximale bei V1 auftretende Spannung V1max bei kleinstem Stromsetzwiderstand Rsetmin folgender Beziehung genügt: V1max < Vcc - 1,5V. Die Diode D1 ist eine Suppressordiode, die den Eingang der Kommunikationsleitung CL gegen Fehlverdrahtung und ESD schützt. Sie muss u.a. nach kleinen Leckströmen ausgewählt werden, damit sie den Leuchtdiodenstrom Iout nicht verfälscht. Die Widerstände RA1 und RB1 dienen der Einstellung von Vref. Die RC-Glieder R11, R12, C1 R2, R3, C3 sowie R4, R5, C5 um die Verstärker herum dienen der Tiefpassfilterung. Die Eingangsgröße der Kommunikationsleitung CL ist Rset, also keine dynamische Veränderliche. Demzufolge können unerwünschte höherfrequente Störungen durch Filter entschärft werden. Die Kondensatoren im Rückkopplungspfad der Operationsverstärker IC1a und IC1b dienen der Stabilisierung. Die Ausgangsspannung V1 der linken Verstärkerstufe wird nun in die rechte Verstärkerstufe eingegeben. Die rechte Verstärkerstufe mit dem Operationsverstärker IC1b dient der Kompensation der Spannung Vsh am Shuntwiderstand Rshunt. Es gilt folgende Beziehung:

$$V2 = V1 * R3 \, / \, (R2 + R3) * (1 + R6 \, / \, (R4 + R5) - Vsh * R6 \, / \, (R4 + R5)) \tag{4}$$

Für R3 = R4 und R4 + R5 = R6 wird daraus:

$$V2 = V1 - Vsh = Vref \, (1 + R1 \, / \, Rset) = Vref + R1 \, I_{CL} \tag{5}$$

Auf diese Weise ist der dynamische Einfluss des Shuntwiderstandes Rshunt, der von dem Betriebsstrom der Leuchtdioden Iout durchflossen wird, in weiten Frequenzbereichen kompensiert. Die Spannung V2 muss nun noch an den Aussteuerbereich des Analog-Digital-Wandlers 37 angepasst werden.

Das Signal wird mit Hilfe einer Referenzdiode um eine vorbestimmte Offsetspannung FV nach unten verschoben und danach mit einem moderaten Teiler reduziert.

Das entspricht einer Anpassung von Lage und Amplitude des Rset-Bereichs an den Aussteuerbereich des Analog-Digital-Wandlers. Diese Maßnahme stellt sicher, dass der Aussteuerbereich des Analog-Digital-Wandlers gut genutzt wird, und es ergibt sich:

$$V_{ADC} = (V2 - FV) * R8 \, / \, (R7 + R8) \tag{6}$$

Die Widerstände RA2 und RB2 dienen der Einstellung der Offsetspannung FV.

Wird nun [5] in [6] eingesetzt, so ergibt sich nun folgender Zusammenhang:

$$V_{ADC} = R8 / (R7 + R8) * (V_{ref} + R1 * I_{CL} - FV) \qquad [7]$$

$$Iout = 1000 \, I_{CL} = 1000 / R1 \, [(1 + R7 / R8) \, V_{ADC} - Vref + FV] \qquad [8]$$

$$Iout = \alpha \, V_{ADC} + \beta \qquad [9]$$

In die Konstante $\alpha$ fließt noch ein der Wert der Referenzspannung des Analog-Digital-Wandlers und die Bit-Auflösung des Analog-Digital-Wandlers (8 oder 10 Bit).

Die Funktionszustände und die Fehlerzustände werden in der vorliegenden Ausführungsform nun wie folgt abgebildet:

Der Bereich Rsetmin - Rsetmax wird z.B. auf 60% des Aussteuerbereiches des Analog-Digital-Wandlers abgebildet. Dann bleiben am oberen und am unteren Ende des Aussteuerbereichs noch jeweils 20% zum Detektieren von Fehlerzuständen und weiteren Funktionszuständen:

a.) Der Stromsetzwiderstand Rset ist kleiner als es dem maximalen Ausgangsstrom Ioutmax im Netzteil entspricht. Dieser Bereich kann z.B. verwendet werden, um die Stromregelung auf einen externen Eingang umzuschalten und den Strom z.B. mittels des DALI-Protokolls einzustellen.

b.) Der Stromsetzwiderstand Rset ist noch kleiner bis hin zum Kurzschluss. Dies deutet auf eine Fehlverdrahtung hin und dementsprechend wird das Netzteil PSU in einen Fehlerzustand gebracht.

c.) Der Stromsetzwiderstand Rset ist größer als es dem minimalen Ausgangsstrom Ioutmin entspricht. Auch dieser Bereich kann z.B. verwendet werden, um die Stromregelung auf einen externen Eingang umzuschalten und den Strom z.B. mittels des DALI-Protokolls einzustellen.

d.) Der Stromsetzwiderstand Rset ist noch größer bis hin zu offenen Klemmen. Dies deutet ebenfalls auf eine Fehlverdrahtung oder defekte Lichtquellenmodule hin und dementsprechend wird das Netzteil PSU in einen Fehlerzustand gebracht.

Die Grenzen zwischen den Fällen a und b bzw. zwischen c und d sind hier rein Beispielhaft gewählt und im Prinzip willkürlich wählbar. Bei allen Grenzen sind Hysteresen vorgesehen, um ein Oszillieren zwischen den Modi zu vermeiden. Der Fall d schließt auch die Erkennung von Überspannung auf der Kommunikationsleitung CL (infolge Fehlverdrahtung) ein.

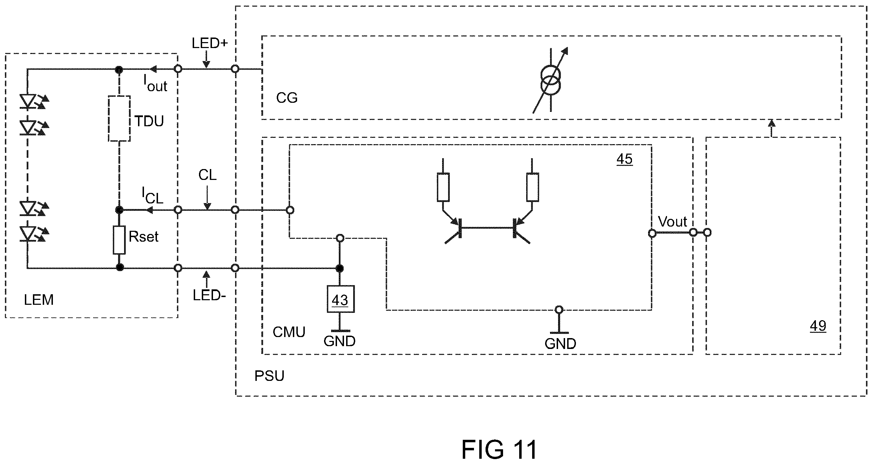

**Fig. 11** zeigt ein Blockschaltbild von Ausführungsformen der erfindungsgemäßen Beleuchtungsanlage mit einer vereinfachten Auswerteschaltung. Die vereinfachte Auswerteschaltun basiert auf der Erkenntnis, dass für eine geeignete Auswertung des Stromsetzwiderstandes Rset eine Potentialtrennung oder Potentialverschiebung benötigt wird, da im Stromkreis für die LEDs ein Strommesselement 43 vorhanden ist, so dass das Messignal keinen direkten Massebezug zur Schaltungsmasse GND hat. Da die meisten Auswertevarianten - seien es digitale Auswertungen per Mikrokontroller oder analoge Schaltungen - aber einen Massebezug des Signals voraussetzen, ist eine Auswerteschaltung notwendig, die das Messignal auf Masse GND bezogen zur Verfügung stellt. Die Masse GND ist hier die interne Schaltungsmasse des Netzteils PSU. Ein Anschluss des Strommesselements 43 ist mit der Masse GND verbunden. Der andere Anschluss des Strommesselements 43 ist mit dem negativen Ausgang LED-, oben auch als gemeinsame Masseleitung bezeichnet, verbunden. Es ist also zwischen der gemeinsamen Masseleitung LED- und der internen Schaltungsmasse GND zu differenzieren. Deren Potential ist zwar ähnlich, aber nicht gleich. Das Messignal muss also in seiner Spannung um den Potentialunterschied zwischen gemeinsamer Masseleitung LED- und interner Schaltungsmasse GND verschoben werden. Dies geschieht mit einem Stromspiegel, der den Strom auf der Kommunikationsleitung CL misst. Dieser Strom wird auf der anderen Seite des Stromspiegels mittels einem Widerstand in eine auf die interne Schaltungsmasse bezogene Spannung GND umgewandelt. Diese kann dann z.B. von einer Steuerschaltung 49 geeignet ausgewertet werden.

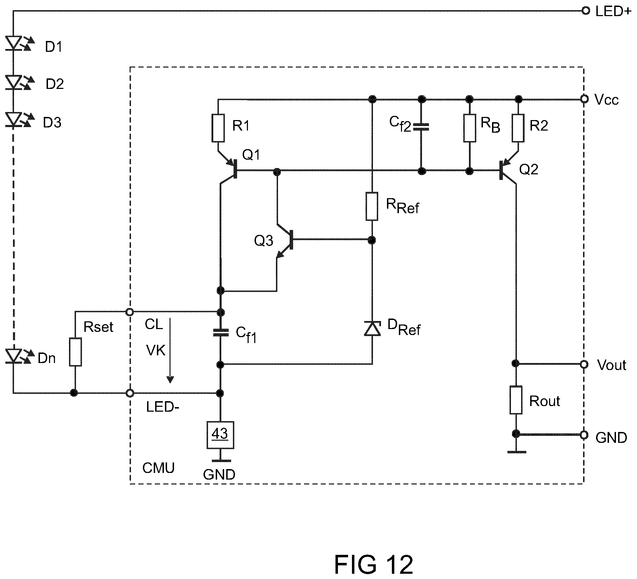

**Fig. 12** zeigt eine erste Ausführungsform der vereinfachten Strommesseinrichtung CMU. Kern der vereinfachten Strommesseinrichtung CMU ist ein einfacher Stromspiegel, der jedoch so erweitert wurde, dass er an die Kommunikationsleitung CL die vorbestimmte Spannung Vk anlegt. Der dann durch den Stromsetzwiderstand Rset fließende Strom wird gespiegelt und kann dann mittels des Messwiderstandes $R_{out}$ in das interne Messignal Vout umgewandelt werden. Dieses interne Messignal Vout ist auf die interne Schaltungsmasse GND bezogen. Der Stromspiegel weist einen eingangsseitigen ersten Transistor Q1 und einen ausgangsseitigen zweiten Transistor Q2 auf. Der eingangsseitige erste Transistor Q1 wird nun derart angesteuert, dass an der Kommunikationsleitung CL die vorbestimmte Spannung Vk anliegt. Dies kann durch verschiedene Schaltungsmaßnahmen erreicht werden.

In der ersten Ausführungsform der vereinfachten Strommesseinrichtung CMU wird die Spannung an der Kommunikationsleitung CL durch eine Schaltung mit einer Zenerdiode $D_{Ref}$ und einen dritten Transistor Q3 in Basisschaltung auf den vorbestimmten Wert geregelt. Der Kollektor des dritten Transistors Q3 ist mit der Basis des ersten Transistors Q1 verbunden. Der Emitter des dritten Transistors Q3 ist mit dem Kollektor des ersten Transistors Q1 verbunden. Dieser Punkt ist auch der Eingang der Kommunikationsleitung CL. Die Kathode der Zenerdiode $D_{Ref}$ ist mit der Basis des dritten Transistors Q3 verbunden. Die Anode der Zenerdiode $D_{Ref}$ ist mit der gemeinsamen Masseleitung LED- verbunden. Ein Widerstand $R_{Ref}$ ist zwischen die Basis des dritten Transistors Q3 und eine Versorgungsspannung Vcc geschaltet. Der Stromspiegel ist über Emittergegenkoppelwiderstände R1 und R2 an die Versorgungsspannung Vcc angebunden. Die Transistoren Q1 und Q2 sind PNP-Transistoren, der Transistor Q3 ist ein NPN-Transistor. Zwischen den Emitter des dritten Transistors Q3 und der gemeinsamen Masseleitung kann optional noch ein Filterkondensator $C_{f1}$ geschaltet werden.

Im Folgenden wird nun die Funktion der Schaltungsanordnung erläutert:

Ist die Spannung an der Kommunikationsleitung CL zu hoch, reduziert sich der Basisstrom des dritten Transistors Q3. Damit reduziert sich auch der Kollektorstrom des dritten Transistors Q3, damit sinkt die Basis-Emitterspannung des ersten Transistors Q1. Somit sinkt auch der Kollektorstrom des ersten Transistors Q1, der dem Strom auf der Kommunikationsleitung CL entspricht. Die Spannung, die am Stromsetzwiderstand Rset abfällt reduziert sich damit ebenfalls. Durch diese Wirkkette wird die Spannung auf der Kommunikationsleitung CL auf dem vorbestimmten Wert gehalten, und der auf der Kommunikationsleitung CL fließende Strom gemessen und am Stromspiegel gespiegelt. Dort wird er wieder in ein internes Messsignal $V_{out}$ umgewandelt, welches ein Maß für den Leitwert des Stromsetzwiderstandes Rset ist. Die Schaltung bietet eine weitgehende Versorgungsspannungsunabhängigkeit sowie eine gute Unterdrückung von Versorgungsspannungsschwankungen.

Bei einer vorbestimmten Spannung Vk von 5V auf der Kommunikationsleitung CL sowie einer Emittergegenkopplungsspannung von etwa 1V bis 5V gilt mit ausreichender Genauigkeit:

$$U(R1) = R1 * I(R1) = R1 * I_{CL} \qquad [10]$$

$$U(R2) = U(R1) \qquad [11]$$

$$I(R2) = R1 * I_{CL} / R2 \qquad [12]$$

$$I(R2) = I(R_{out}) \qquad [13]$$

$$Vout = I_{CL} * R_{out} * R1 / R2 \qquad [14]$$

Mit Vk = 5V gilt somit:

$$Vout = (5V/Rset) * R_{out} * R1 / R2 \qquad [15]$$

Das interne Messsignal $V_{out}$ hängt damit also nur noch von bekannten Werten und dem messbaren Strom $I_{CL}$ auf der Kommunikationsleitung CL ab und ist somit einfach auszuwerten.

Es ist vorteilhaft, die Transistoren Q1 und Q2 als gepaarte Doppeltransistoren in einem gemeinsamen Gehäuse einzusetzen, da dies die Genauigkeit der Schaltung erhöht. Je nach den Anforderungen an die Genauigkeit ist dies aber nicht notwendig und somit optional.

Ist eine größere Potentialverschiebung des internen Messsignals $V_{out}$ notwendig, so kann dies durch eine geeignete Wahl der Emittergegenkoppelwiderstände R1 und R2 erreicht werden. Auch oder an Stelle der Wertewahl von R1 und R2 kann ein weiterer Widerstand in die Strecke Kollektor Q2 zu Rout eingefügt werden, um den Spannungsabfall an der Kollektor-Emitterstrecke von Q2 auf einen gewünschten Wert einstellen zu können.

Die erste Ausführungsform der vereinfachten Strommesseinrichtung CMU bietet den Vorteil, dass sie einen minimalen Temperaturkoeffizienten von +2mV/K aufweist, da die eingesetzte Zenerdiode von 5,6V einen sehr geringen Temperaturkoeffizienten aufweist. Da auch der dritte Transistor Q3 in etwa einen $T_C$ von 2mV/K aufweist, beträgt die Temperaturabhängigkeit der Anordnung etwa 4mV/K. Bei einem Temperaturunterschied von ±50K entspräche dies einer Änderung der vorbestimmten Spannung auf den Kommunikationsleitung CL von ±2%. Damit kann ein Lichtquellenmodul LEM auf etwa ±1K genau überwacht werden. Die zur Versorgung der Schaltung notwendige Spannung Vcc beträgt gegenüber der gemeinsamen Masse LED- etwa 12 V und ist damit einfach bereitzustellen. Die Kondensatoren $C_{f1}$ und $C_{f2}$ dienen der Filterung und Stabilisierung der Schaltung und sind nicht zwingend notwendig. Der Widerstand $R_B$ ist ein Pull-Down Widerstand für den Stromspiegel und ist ebenfalls nicht zwingend notwendig. Er kann aber dazu beitragen, den Stromspiegel stabiler betreiben zu können, da er einen Gegenpol zur Aufsteuerung des Stromspiegels durch den dritten Transistor Q3 bildet.

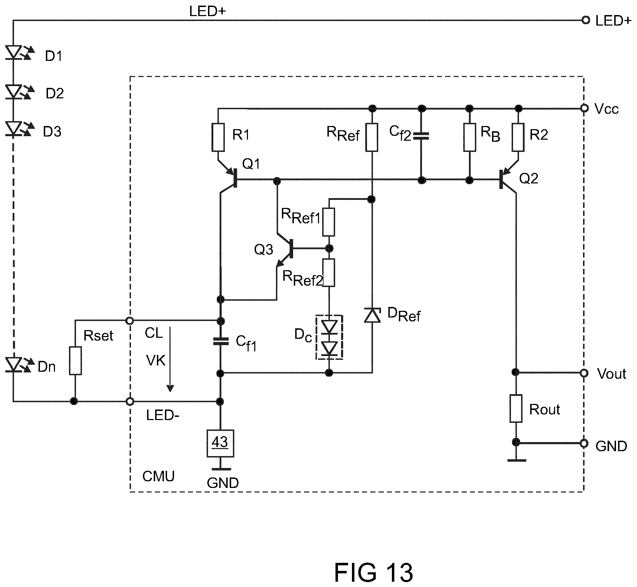

**Fig. 13** zeigt eine zweite Ausführungsform der vereinfachten Strommesseinrichtung CMU. Die zweite Ausführungsform der vereinfachten Strommesseinrichtung CMU ist ähnlich zur ersten Ausführungsform der vereinfachten Strommesseinrichtung CMU, daher werden nur die Unterschiede zur ersten Ausführungsform erläutert.

In der zweiten Ausführungsform kann die Spannung an der Kommunikationsleitung CL noch genauer eingestellt werden. Zwischen der Versorgungsspannung VCC und der gemeinsamen Masse LED- ist wie in der ersten Ausführungsform eine Serienschaltung der Referenzdiode $D_{Ref}$ und eines Widerstandes $R_{Ref}$ geschaltet. Jedoch ist der Verbindungspunkt zwischen der Referenzdiode $D_{Ref}$ und eines Widerstandes $R_{Ref}$ nicht wie in der ersten Ausführungsform direkt an die Basis des dritten Transistors Q3 angeschlossen, sondern über einen Spannungsteiler aus zwei Widerständen $R_{Ref1}$ und $R_{Ref2}$, der zwischen den Verbindungspunkt zwischen der Referenzdiode $D_{Ref}$ und eines Widerstandes $R_{Ref}$ und die gemeinsame Masseleitung LED- geschaltet ist. Die Basis des dritten Transistors Q3 ist an den Mittelpunkt des Spannungsteilers angeschlossen.

Zur Verbesserung der Temperaturkompensation kann zwischen den Widerstand $R_{Ref2}$ und die gemeinsame Masseleitung LED- noch eine Doppeldiode eingefügt werden.

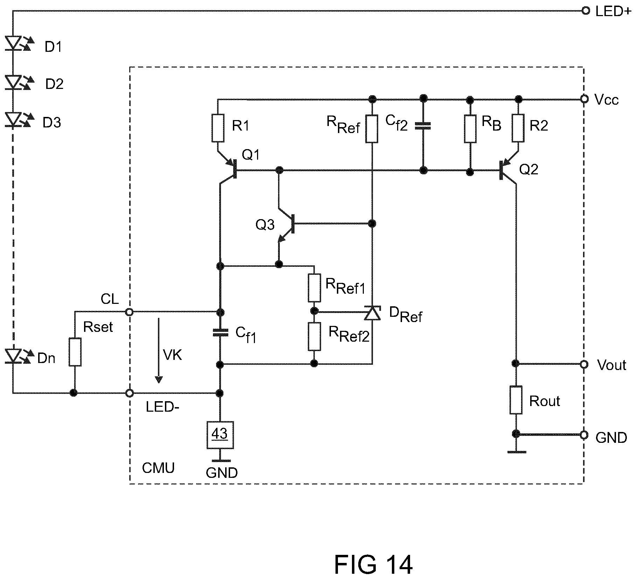

**Fig. 14** zeigt eine dritte Ausführungsform der vereinfachten Strommesseinrichtung CMU. Die dritte Ausführungsform der vereinfachten Strommesseinrichtung CMU ist ähnlich zur ersten Ausführungsform der vereinfachten Strommesseinrichtung CMU, daher werden nur die Unterschiede zur ersten Ausführungsform erläutert.

In der dritten Ausführungsform der Strommesseinrichtung CMU ist die Zenerdiode durch eine einstellbare Zenerdiode ersetzt. Die einstellbare Zenerdiode kann z.B. eine einstellbare Zenerdiode vom Typ TL431 sein. Die einstellbare Zenerdiode $D_{Ref}$ ist wie die Zenerdiode in der ersten Ausführungsform verschaltet. Die Steuerelektrode der einstellbare Zenerdiode $D_{Ref}$ ist mit dem Mittelpunkt eines Spannungsteilers aus zwei Widerständen $R_{Ref1}$ und $R_{Ref2}$ verbunden. Der Spannungsteilers aus den zwei Widerständen $R_{Ref1}$ und $R_{Ref2}$ ist zwischen die Kommunikationsleitung CL und die gemeinsame Masse LED-geschaltet. Diese Schaltungsvariante bietet höchste Genauigkeit beim Einstellen der vorbestimmten Spannung Vk auf der Kommunikationsleitung CL durch die einstellbare Spannungsreferenz.

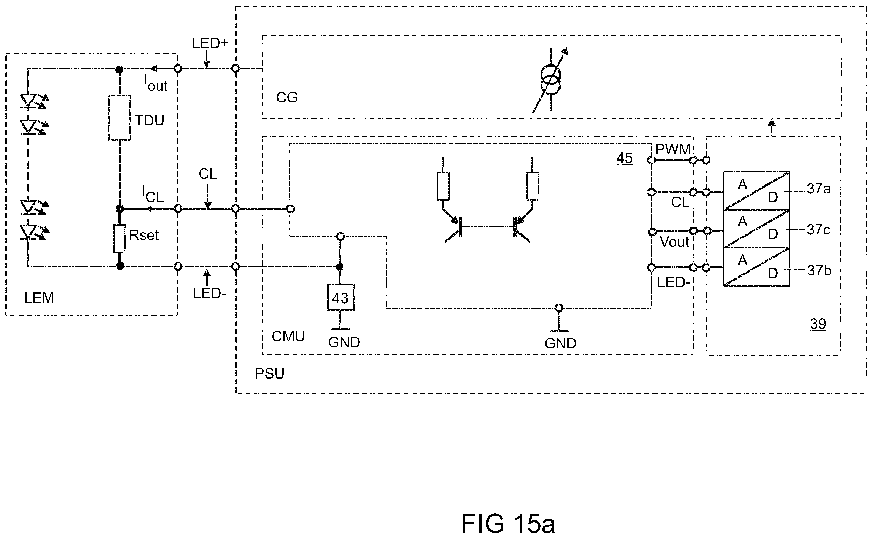

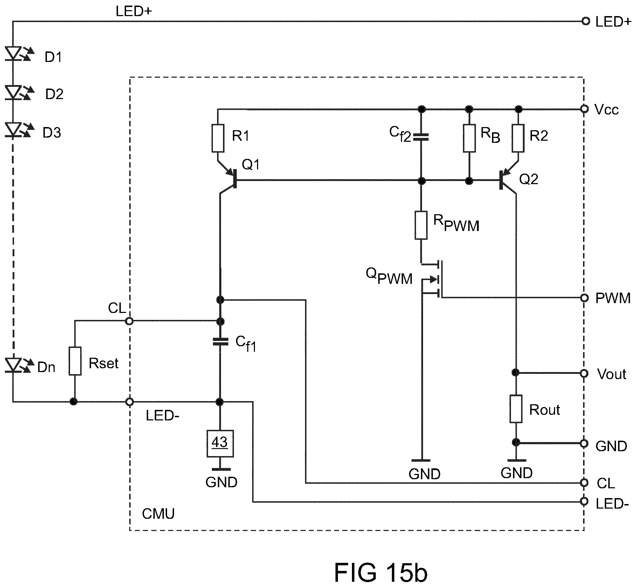

Die **Fig. 15a** zeigt ein Blockschaltbild der digitalen Ausführungsform der erfindungsgemäßen Beleuchtungsanlage mit einer vereinfachten Auswerteschaltung. Die **Fig. 15b** zeigt eine vierte Ausführungsform der vereinfachten Strommesseinrichtung CMU. Die vierte Ausführungsform der vereinfachten Strommesseinrichtung CMU ist ähnlich zur ersten Ausführungsform der vereinfachten Strommesseinrichtung CMU, daher werden nur die Unterschiede zur ersten Ausführungsform erläutert.

In der vierten Ausführungsform wird die Basisspannung des Stromspiegels mittels eines Mikrokontrollers 39 geregelt. Der Mikrokontroller 39 ist so programmiert, dass er die Spannung Vk auf der Kommunikationsleitung CL auf den vorbestimmten Wert, z.B. 5V, regelt. Dazu weist die Strommesseinrichtung CMU zwei weitere Ausgänge CL, LED- und einen Eingang PWM auf. An den zwei weiteren Ausgängen liegt das Potential der gemeinsame Masse LED- und das Potential der Kommunikationsleitung CL an. Damit ist der Mikrokontroller 39 in der Lage, die Spannung auf der Kommunikationsleitung CL gegenüber ihrem Bezugspotential GND zu messen, indem er das Potential auf der Kommunikationsleitung CL mit einem ersten Analog-Digital-Wandler 37a misst, und das Potential der gemeinsamen Masseleitung LED- mittels einem zweiten Analog-Digital-Wandler 37b misst. Die beiden Potentiale können nun digital voneinander abgezogen werden, so dass die Spannung auf der Kommunikationsleitung CL gegenüber ihrem Bezugspotential LED- bekannt ist. Die interne Messspannung Vout wird mittels eines dritten Analog-Digital-Wandlers 37c gemessen. Der Mikrokontroller legt dann ein Pulweitenmoduliertes Signal PWM an den Eingang PWM an. Der Eingang PWM ist mit dem Gate eines Mos-Fets $Q_{PWM}$ verbunden. Der Drainanschluss des Mos-Fets $Q_{PWM}$ ist über einen Widerstand $R_{PWM}$ an die Basis des ersten Transistors Q1 angeschlossen. Der Sourceanschluss des Mos-Fets $Q_{PWM}$ ist an die interne Schaltungsmasse GND angeschlossen. Der Mikrokontroller 39 legt an den Eingang PWM ein Pulsweitenmoduliertes Signal an, das mittels des Mikrokontrollers 39 derart geregelt wird, dass die Spannung auf der Kommunikationsleitung CL der vorbestimmten Spannung entspricht. Dabei kann die Spannung durch Änderung des Tastverhältnisses am Eingang PWM eingestellt werden. Über eine entsprechende Programmierung kann die Temperaturabhängigkeit der Strommesseinrichtung CMU fast vollständig ausgeregelt werden. Dies kann z.B. durch hinterlegte Tabellen im Mikrokontroller 39 erreicht werden, die das Tastverhältnis am Eingang PWM in Abhängigkeit der Temperatur verändern.

Bei digitaler Ansteuerung mittels eines Mikrokontrollers 39 kann die Strommesseinrichtung CMU auch getaktet betrieben werden. Da die thermische Trägheit der Lichtquellenmodule LEM groß ist, kann die Messung des resultierenden Stromsetzwiderstandes Rset in zeitlich größeren Abständen Erfolgen, während der verbleibenden Zeit ist die Strommesseinrichtung CMU dann inaktiv. Dadurch erwärmen sich die Transistoren Q1 und Q2 des Stromspiegels nicht unnötig und die Temperaturabhängigkeit der Anordnung wird reduziert. Zum Beispiel kann die Strommesseinrichtung CMU immer für wenige ms zur Bestimmung des Strombedarfs der angeschlossenen Lichtquellenmodule LEM aktiviert werden, um danach für eine oder mehrere Sekunden deaktiviert zu werden. Dies gibt den Transistoren Q1, Q2 genügend Zeit, wieder abzukühlen, und führt damit zu einer erheblichen Reduzierung der durchschnittlichen Strombelastung dieser Transistoren.

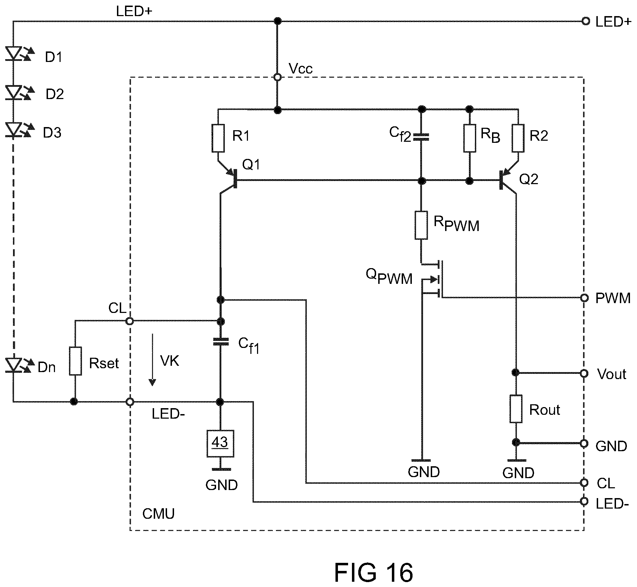

**Fig. 16** zeigt eine fünfte Ausführungsform der vereinfachten Strommesseinrichtung CMU. Die fünfte Ausführungsform der vereinfachten Strommesseinrichtung CMU ist ähnlich zur vierten Ausführungsform der vereinfachten Strommesseinrichtung CMU, daher werden nur die Unterschiede zur vierten Ausführungsform erläutert.

Im Unterschied zur vierten Ausführungsform wird in der fünften Ausführungsform die Spannungsversorgung VCC für die Strommesseinrichtung CMU über die Betriebsspannung der Versorgungsleitung LED+ der Lichtquellenmodule LEM bewerkstelligt. Für die Versorgung der Schaltung muss sichergestellt werden, dass die Betriebsspannung der Versorgungsleitung LED+ mindestens 12V über der gemeinsamen Masseleitung LEDliegt.

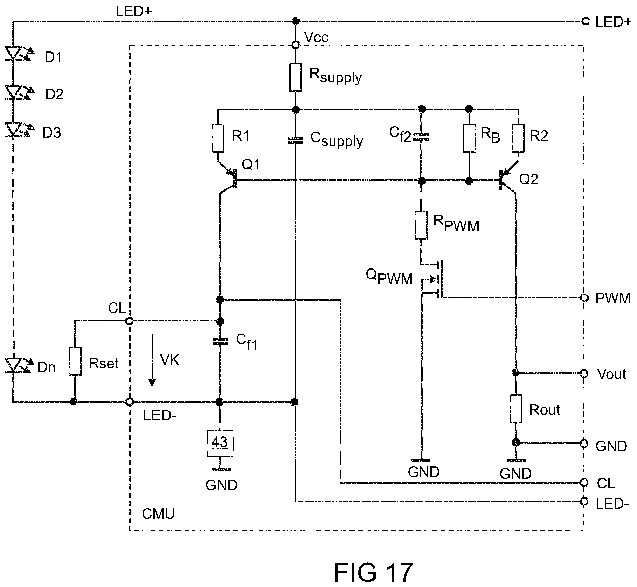

**Fig. 17** zeigt eine sechste Ausführungsform der vereinfachten Strommesseinrichtung CMU. Die sechste Ausführungsform der vereinfachten Strommesseinrichtung CMU ist ähnlich zur fünften Ausführungsform der vereinfachten Strommesseinrichtung CMU, daher werden nur die Unterschiede zur fünften Ausführungsform erläutert.

Auch in der sechsten Ausführungsform wird eine Betriebsspannung VCC für die Strommesseinrichtung CMU von der Versorgungsleitung LED+ gespeist. Die von der Versorgungsleitung abgegriffene Spannung wird aber noch mittels der Komponenten $R_{supply}$ und $C_{supply}$ gefiltert. Dadurch wird der Einfluss eines eventuellen Taktbetriebes der Strommesseinrichtung CMU auf die Lichtabgabe der Lichtquellenmodule LEM bei kleinen Dimmstellungen reduziert.

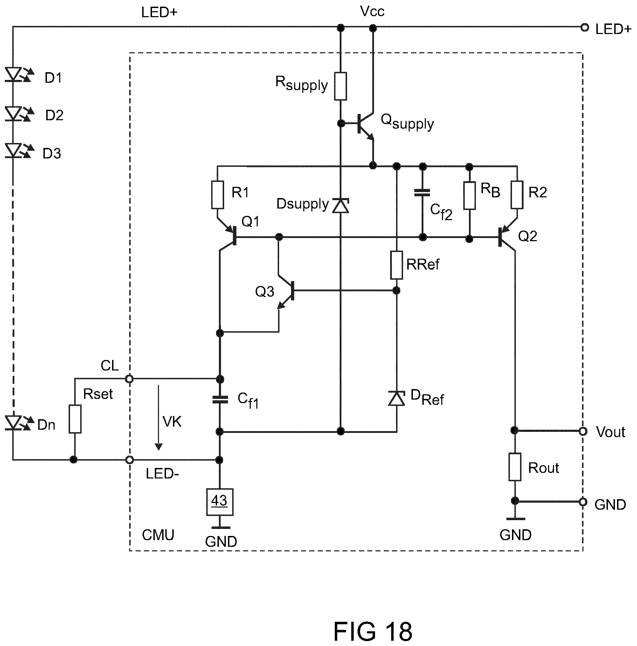

**Fig. 18** zeigt eine siebte Ausführungsform der vereinfachten Strommesseinrichtung CMU. Die siebte Ausführungsform der vereinfachten Strommesseinrichtung CMU ist ähnlich zur ersten Ausführungsform der vereinfachten Strommesseinrichtung CMU, daher werden nur die Unterschiede zur ersten Ausführungsform erläutert. Auch bei dieser Ausführungsform wird die Strommesseinrichtung CMU aus der Versorgungsleitung LED+ gespeist. Die Speiseschaltung weist aber zusätzlich eine Spannungsstabilisierende Funktion auf, so dass die Versorgungsspannung für die Strommesseinrichtung CMU unabhängig von der Spannung auf der Versorgungsleitung LED+ gleich bleibt.

Damit wird die Verlustleistung am ersten und zweiten Transistor Q1 und Q2 auf einen konstanten Wert begrenzt, was zu einer Erhöhung der Genauigkeit der Strommesseinrichtung CMU führt.

## Bezugszeichenliste

| | |
|---|---|
| Netzteil | PSU |
| Kommunikationsleitung | CL |
| Lichtquellenmodul | LEM |
| Stromsetzwiderstand | Rset |
| Leistungsteil | CG |
| Strommesseinrichtung | CMU |
| Verstärker | 30 |
| Offset-Anpassungsschaltung | 33 |
| Amplituden-Anpassungsschaltung | 35 |
| Analog-Digital-Wandler | 37 |
| Mikrokontroller | 39 |
| Temperaturrückregelungseinheit | TDU |
| Internes Messsignal | Vout |

## Patentansprüche

1. Netzteil (PSU) aufweisend:

   - einen Ausgang (LED+, LED-) zum Ausgeben eines Betriebsstromes in Abhängigkeit eines internen Messsignals (Vout),
   - eine Kommunikationsleitung (CL), welche auf den negativen Ausgang (LED-) bezogen ist,
   - eine Strommesseinrichtung (CMU), die mit der Kommunikationsleitung (CL) verbunden ist und einen Stromspiegel aufweist,

wobei

- der Stromspiegel durch einen ersten Transistor (Q1) und einen zweiten Transistor (Q2) gebildet wird, und weiterhin einen dritten Transistor (Q3) aufweist, dessen Arbeitselektrode mit der Steuerelektrode des ersten Transistors verbunden ist, dessen Bezugselektrode mit mit der Arbeitselektrode des ersten Transistors (Q1) verbunden ist, und dessen Steuerelektrode entweder mit einem Mikrokontroller (39) oder mit dem Mittelpunkt einer Serienschaltung eines Widerstandes ($R_{Ref}$) und einer Zenerdiode ($D_{Ref}$) verbunden ist, wobei die Serienschaltung zwischen die Versorgungsspannung (VCC) und einen Ausgangsanschluss (LED-) geschaltet ist, wobei

- mindestens ein Lichtquellenmodul (LEM) an den Ausgang (LED+, LED-) anschließbar ist, wobei das mindestens eine Lichtquellenmodul (LEM) einen-Stromsetzwiderstand (Rset) aufweist, der an die Kommunikationsleitung (CL) und an den negativen Ausgang (LED-) anschließbar ist

- die Strommesseinrichtung (CMU) eingerichtet ist, durch Anlegen einer Messspannung an die Kommunikationsleitung (CL)einen Strom durch den Stromsetzwiderstand (Rset) zu generieren, der durch die Kommunikationsleitung (CL) fließt, und der proportional zum Leitwert eines Stromsetzwiderstandes (Rset) ist,

- die Strommesseinrichtung (CMU) eingerichtet ist, den generierten Strom auf der Kommunikationsleitung (CL) mittels des Stromspiegels zu spiegeln, und

- die Strommesseinrichtung (CMU) eingerichtet ist, den gespiegelten Strom in ein internes Messsignal (Vout) mit einem von der Kommunikationsleitung (CL) unterschiedlichen Bezugspotential umzuwandeln, wobei das interne Messsignal (Vout) auf eine interne Schaltungsmasse (GND) bezogen ist.

2. Netzteil (PSU) nach Anspruch 1, **dadurch gekennzeichnet, dass** der erste Transistor (Q1) und der zweite Transistor (Q2) erste und zweite Emittergegenkoppelwiderstände (R1, R2) aufweisen.

3. Netzteil (PSU) nach Anspruch 2, **dadurch gekennzeichnet, dass** die Steuerelektroden des ersten Transistors (Q1) und des zweiten Transistors (Q2) miteinander verbunden sind, die Bezugselektrode des ersten Transistors über den ersten Emittergegenkoppelwiderstand (R1) mit einer Versorgungsspannung (VCC) verbunden ist, die Bezugselektrode des zweiten Transistors über den zweiten Emittergegenkoppelwiderstand (R1) mit der Versorgungsspannung (VCC) verbunden ist, die Arbeitselektrode des ersten Transistors (Q1) mit der Kommunikationsleitung (CL) verbunden ist, und die Arbeitselektrode des zweiten Transistors (Q2) mit einem Meßwiderstand ($R_{out}$) verbunden ist.

4. Netzteil (PSU) nach Anspruch 1 oder 2, **dadurch gekennzeichnet, dass** es eingerichtet ist, die Spannung an der Steuerelektrode des ersten Transistors (Q1) des Stromspiegels derart einzustellen, dass die Spannung (Vk) auf der Kommunikationsleitung (CL) einer vorbestimmten Spannung entspricht.

5. Netzteil (PSU) nach einem der vorhergehenden Ansprüche, **dadurch gekennzeichnet, dass** die Steuerelektrode des dritten Transistors mit dem Mittelpunkt eines Spannungsteilers ($R_{Ref1}$, $R_{Ref2}$) verbunden ist, der parallel zur Zenerdiode ($D_{Ref}$) geschaltet ist.

6. Netzteil (PSU) nach einem der vorhergehenden Ansprüche, **dadurch gekennzeichnet, dass** die Zenerdiode ($D_{Ref}$) eine einstellbare Zenerdiode ist, deren Steuerelektrode mit dem Mittelpunkt eines Spannungsteilers ($R_{Ref1}$, $R_{Ref2}$) verbunden ist, der zwischen die Kommunikationsleitung (CL) und einen Ausgang (LED-) des Netzteils geschaltet ist.

7. Netzteil (PSU) nach einem der vorhergehenden Ansprüche, **dadurch gekennzeichnet, dass** die Strommesseinrichtung (CMU) eingerichtet ist, die Versorgungsspannung (VCC) der Strommesseinrichtung (CMU) aus der Ausgangsspannung (LED+) des Netzteils zu generieren.

8. Netzteil (PSU) nach Anspruch 7, **dadurch gekennzeichnet, dass** die Strommesseinrichtung (CMU) eingerichtet ist, die aus der Ausgangsspannung (LED+) generierte Versorgungsspannung (VCC) zu filtern und/oder in der Spannung zu stabilisieren.

9. Netzteil (PSU) nach einem der vorhergehenden Ansprüche, **dadurch gekennzeichnet, dass** mehrere Lichtquellenmodule (LEM 1, LEM2, LEMm) parallel geschaltet an das Netzteil (PSU) anschließbar sind.

10. Beleuchtungsanlage, aufweisend ein Netzteil (PSU) nach einem oder mehreren der Ansprüche 1 bis 11.

11. Verfahren zum Einstellen eines Stromwertes für mindestens ein Lichtquellenmodul (LEM), welches an ein Netzteil (PSU) gemäß einem oder mehreren der Ansprüche 1 bis 10 angeschlossen ist, **gekennzeichnet durch** folgende Schritte:

- Anlegen einer Messspannung (Vk) an die Kommunikationsleitung (CL) zu Generierung eines Messstroms ($I_{CL}$) in der Kommunikationsleitung (CL), der proportional zum Leitwert eines Stromsetzwiderstandes (Rset) des mindestens einen Lichtquellenmoduls (LEM) ist,
- Spiegeln des in der Kommunikationsleitung fließenden Messstromes ($I_{CL}$),
- Umwandeln des gespiegelten Stromes in ein internes Messsignal (Vout) mit einem von der Kommunikationsleitung (CL) unterschiedlichen Bezugspotential,
- Bewerten des internen Messsignals (Vout),
- Einstellen eines Betriebsstromes am Ausgang (LED+, LED-) des Netzteiles (PSU) anhand des bewerteten Messsignals (Vout).

**Claims**

1. Power supply unit (PSU), having:

   - an output (LED+, LED-) for outputting an operating current depending on an internal measurement signal (Vout),
   - a communications line (CL), which is referred to the negative output (LED-),
   - a current-measuring device (CMU), which is connected to the communications line (CL) and has a current mirror, wherein
   - the current mirror is formed by a first transistor (Q1) and a second transistor (Q2) and furthermore has a third transistor (Q3), the working electrode of which is connected to the control electrode of the first transistor, the reference electrode of which is connected to the working electrode of the first transistor (Q1), and the control electrode of which is connected either to a microcontroller (39) or to the centre point of a series circuit of a resistance ($R_{Ref}$) and a Zener diode ($D_{Ref}$), wherein the series connection is connected between the supply voltage (VCC) and an output connection (LED-), wherein
   - at least one light source module (LEM) is connectable to the output (LED+, LED-), wherein the at least one light source module (LEM) has a current-setting resistance (Rset), which is connectable to the communications line (CL) and to the negative output (LED-),
   - the current-measuring device (CMU) is designed to generate a current through the current-setting resistance (Rset) by applying a measurement voltage to the communications line (CL), which current flows through the communications line (CL) and is proportional to the conductance of a current-setting resistance (Rset),
   - the current-measuring device (CMU) is designed to mirror the generated current on the communications line (CL) using the current mirror, and
   - the current-measuring device (CMU) is designed to convert the mirrored current into an internal measurement signal (Vout) with a reference potential which is different from the communications line (CL), wherein the internal measurement signal (Vout) is referred to an internal circuit ground (GND).

2. Power supply unit (PSU) according to Claim 1, **characterized in that** the first transistor (Q1) and the second transistor (Q2) have first and second emitter negative-feedback resistances (R1, R2).

3. Power supply unit (PSU) according to Claim 2, **characterized in that** the control electrodes of the first transistor (Q1) and of the second transistor (Q2) are connected to one another, the reference electrode of the first transistor is connected to a supply voltage (VCC) via the first emitter negative-feedback resistance (R1), the reference electrode of the second transistor is connected to the supply voltage (VCC) via the second emitter negative-feedback resistance (R1), the working electrode of the first transistor (Q1) is connected to the communications line (CL), and the working electrode of the second transistor (Q2) is connected to a measuring resistance ($R_{out}$).

4. Power supply unit (PSU) according to Claim 1 or 2, **characterized in that** it is designed to set the voltage at the control electrode of the first transistor (Q1) of the current mirror in such a way that the voltage (Vk) on the communications line (CL) corresponds to a predetermined voltage.

5. Power supply unit (PSU) according to one of the preceding claims, **characterized in that** the control electrode of the third transistor is connected to the centre point of a voltage divider ($R_{Ref1}$, $R_{Ref2}$), which is connected in parallel with the Zener diode ($D_{Ref}$).

6. Power supply unit (PSU) according to one of the preceding claims, **characterized in that** the Zener diode ($D_{Ref}$) is an adjustable Zener diode, whose control electrode is connected to the centre point of a voltage divider ($R_{Ref1}$, $R_{Ref2}$), which is connected between the communications line (CL) and an output (LED-) of the power supply unit.

7. Power supply unit (PSU) according to one of the preceding claims, **characterized in that** the current-measuring device (CMU) is designed to generate the voltage supply (VCC) of the current-measuring device (CMU) from the output voltage (LED+) of the power supply unit.

8. Power supply unit (PSU) according to Claim 7, **characterized in that** the current-measuring device (CMU) is designed to filter the supply voltage (VCC) generated from the output voltage (LED+) and/or to stabilize it in terms of the voltage.

9. Power supply unit (PSU) according to one of the preceding claims, **characterized in that** a plurality of light source modules (LEM1, LEM2, LEMm), connected in parallel, are connectable to the power supply unit (PSU).

10. Illumination system, having a power supply unit (PSU) according to one or more of Claims 1 to 11.

11. Method for setting a current value for at least one light source module (LEM) that is connected to a power supply unit (PSU) according to one or more of Claims 1 to 10, **characterized by** the following steps:

- applying a measurement voltage (Vk) to the communications line (CL) to generate a measuring current ($I_{CL}$) in the communications line (CL), which is proportional to the conductance of a current-setting resistance (Rset) of the at least one light source module (LEM),
- mirroring the measuring current ($I_{CL}$) flowing in the communications line,
- converting the mirrored current into an internal measurement signal (Vout) with a reference potential which is different from the communications line (CL),
- assessing the internal measurement signal (Vout),
- setting an operating current at the output (LED+, LED-) of the power supply unit (PSU) on the basis of the assessed measurement signal (Vout).

**Revendications**

1. Bloc d'alimentation (PSU), comprenant :

- une sortie (LED+, LED-) pour émettre un courant de service en fonction d'un signal de mesure interne (Vout),
- une ligne de communication (CL) rapportée à la sortie négative (LED-),
- un dispositif de mesure du courant (CMU) relié à une ligne de communication (CL) et comprenant un miroir de courant,
dans lequel
- le miroir de courant consiste en un premier transistor (Q1) et en un deuxième transistor (Q2), et comprend par ailleurs un troisième transistor (Q3) dont l'électrode de travail est reliée à l'électrode de commande du premier transistor, dont l'électrode de référence est reliée à l'électrode de travail du premier transistor (Q1), et dont l'électrode de commande est reliée soit à un microcontrôleur (39), soit au point central d'un circuit série d'une résistance ($R_{Ref}$) et d'une diode Zener ($D_{ref}$), le circuit série étant couplé entre la tension d'alimentation (VCC) et une borne de sortie (LED-),
- au moins un module de source lumineuse (LEM) est susceptible d'être relié à la sortie (LED+, LED-), l'au moins un module de source lumineuse (LEM) comprenant une résistance de réglage du courant (Rset) susceptible d'être reliée à la ligne de communication (CL) et à la sortie négative (LED-),
- le dispositif de mesure du courant (CMU) est configuré pour générer, en appliquant une tension de mesure à la ligne de communication (CL), un courant moyennant la résistance de réglage du courant (Rset) qui passe dans la ligne de communication (CL) et qui est proportionnel à la conductance d'une résistance de réglage du courant (Rset),
- le dispositif de mesure du courant (CMU) est conçu pour reproduire par effet de miroir le courant généré sur la ligne de communication (CL) au moyen du miroir de courant, et
- le dispositif de mesure du courant (CMU) est conçu pour convertir le courant reproduit par effet de miroir en un signal de mesure interne (Vout) ayant un potentiel de référence différent de celui de la ligne de communication (CL), le signal de mesure interne (Vout) étant rapporté à une masse de circuit interne (GND).

2. Bloc d'alimentation (PSU) selon la revendication 1, **caractérisé en ce que** le premier transistor (Q1) et le deuxième transistor (Q2) ont des premier et deuxième résistances de contre-réaction négative d'émetteur R1, R2).

3. Bloc d'alimentation (PSU) selon la revendication 2, **caractérisé en ce que** les électrodes de commande du premier transistor (Q1) et du deuxième transistor (Q2) sont reliées entre elles, l'électrode de référence du premier transistor est reliée à une tension d'alimentation (VCC) via la première résistance de contre-réaction d'émetteur (R1), l'électrode de référence du deuxième transistor est reliée à la tension d'alimentation (VCC) par l'intermédiaire de la deuxième résistance de rétroaction d'émetteur (R2), l'électrode de travail du premier transistor (Q1) est reliée à la ligne de communication (CL) et l'électrode de travail du deuxième transistor (Q2) est reliée à une résistance de mesure (Rout).

4. Bloc d'alimentation (PSU) selon la revendication 1 ou 2, **caractérisé en ce qu'**il est apte à régler la tension de l'électrode de commande du premier transistor (Q1) du miroir de courant de manière à ce que la tension (Vk) sur la ligne de communication (CL) corresponde à une tension prédéterminée.

5. Bloc d'alimentation (PSU) selon l'une des revendications précédentes, **caractérisé en ce que** l'électrode de commande du troisième transistor est reliée au centre d'un diviseur de tension ($R_{Ref1}$, $R_{Ref2}$) qui est relié en parallèle à la diode Zener ($D_{Ref}$).

6. Bloc d'alimentation (PSU) selon l'une des revendications précédentes, **caractérisé en ce que** la diode Zener ($D_{Ref}$) est une diode Zener réglable dont l'électrode de commande est reliée au centre d'un diviseur de tension ($R_{Ref1}$, $R_{Ref2}$) branché entre la ligne de communication (CL) et une sortie (LED-) du bloc d'alimentation électrique.

7. Bloc d'alimentation (PSU) selon l'une des revendications précédentes, **caractérisé en ce que** le dispositif de mesure du courant (CMU) est configuré pour générer la tension d'alimentation (VCC) du dispositif de mesure du courant (CMU) à partir de la tension de sortie (LED+) du bloc d'alimentation.

8. Bloc d'alimentation (PSU) selon la revendication 7, **caractérisé en ce que** le dispositif de mesure du courant (CMU) est configuré pour filtrer la tension d'alimentation (VCC) générée à partir de la tension de sortie (LED+) et/ou stabiliser la tension.

9. Bloc d'alimentation (PSU) selon l'une des revendications précédentes, **caractérisé en ce que** plusieurs modules de source lumineuse (LEM1, LEM2, LEMm) sont susceptibles d'être reliés en parallèle au bloc d'alimentation (PSU).

10. Système d'éclairage comprenant un bloc d'alimentation (PSU) selon une ou plusieurs des revendications 1 à 11.

11. Procédé de réglage d'une valeur de courant pour au moins un module de source lumineuse (LEM) relié à un bloc d'alimentation (PSU) selon l'une ou plusieurs des revendications 1 à 10, **caractérisé par** les étapes suivantes :

- application d'une tension de mesure (Vk) à la ligne de communication (CL) pour générer un courant de mesure ($I_{CL}$) dans la ligne de communication (CL) qui est proportionnel à la conductance d'une résistance de réglage du courant (Rset) de l'au moins un module de source lumineuse (LEM),
- reproduction par effet de miroir dudit courant de mesure ($I_{CL}$) circulant dans la ligne de communication,
- conversion du courant reproduit par effet de miroir en un signal de mesure interne (Vout) ayant un potentiel de référence différent de celui de la ligne de communication (CL),
- analyse du signal de mesure interne (Vout),
- réglage d'un courant de fonctionnement à la sortie LED+, LED- du bloc d'alimentation (PSU) sur la base du signal de mesure analysé (Vout).

FIG 1

FIG 2

FIG 3

FIG 4a

FIG 4b

FIG 5

FIG 6

FIG 7

FIG 8

Start

Messung ADC

Zykluszeit 100 - 500 µs

0-23 — ja → Fehlverdrahtung

nein

24-86 — ja → I_LED zu klein

nein

87-239 — ja → Nennbereich

nein

240-249 — ja → I_LED zu groß

nein

250-255 — ja → Kurzschluss

nein

Power stage switch off

Power stage switch on

FIG 9

FIG 10

EP 2 865 238 B1

FIG 11

LED+

Vcc

R2
Q2
R_B
C_f2
R_Ref
D_Ref
R1
Q1
Q3
C_f1
43
GND
CL
VK
LED-
CMU

Rout
Vout
GND

Rset

D1 D2 D3

Dn

FIG 12

FIG 13

FIG 14

EP 2 865 238 B1

FIG 15a

FIG 15b

FIG 16

FIG 17

FIG 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10051528 A1
- DE 102011087658

- EP 1411750 A2
- US 2010244790 A1